# EUROPÄISCHE PATENTANMELDUNG

(11) **EP 1 018 392 A2**
(43) Veröffentlichungstag der Anmeldung: **12.07.2000**
(21) Anmeldenummer: 99122101.1
(22) Anmeldetag: 05.11.1999
(51) Int. Cl.: B23K 26/08, A24C 5/60

(54) **Perforationsvorrichtung**

(30) Priorität: 08.12.1998 DE 19856413
(71) Anmelder: Hauni Maschinenbau AG, 21033 Hamburg (DE)
(72) Erfinder: Dombek, Manfred, 21521 Dassendorf (DE); Voss, Helmut, 25551 Lokstedt (DE)
(74) Vertreter: Eisenführ, Speiser & Partner

(57) **Zusammenfassung**

Die Erfindung betrifft eine Perforationsvorrichtung zum Herstellen von Öffnungen in einer Umfangsoberfläche eines im wesentlichen länglichen, zylinderförmigen Gegenstandes, insbesondere einer Zigarette, mit einer Lichtquelle zum Erzeugen mindestens eines energiereichen Lichtstrahles, mit dessen Hilfe die Öffnungen in den Gegenstand einbringbar sind, mit einer durch ein Nachführmittel zum Nachführen des Lichtstrahles erzeugbaren Wirkzone, innerhalb derer der Lichtstrahl zum Einbringen der Öffnungen auf einen sich durch die Wirkzone bewegenden Gegenstand einwirkt, mit Rollmitteln zum Erzeugen einer Eigenrotationsbewegung der Gegenstände um ihre Längsachse während die Gegenstände sich durch die Wirkzone bewegen, um die Umfangsoberfläche dem Lichtstrahl auszusetzen, mit Transportmitteln zum Befördern des Gegenstandes durch die Wirkzone. Die Erfindung ist gekennzeichnet durch ein Lichtbrechungsmittel, durch welches der Lichtstrahl vor dem Erreichen der Wirkzone hindurchgeführt wird, so daß dieser beim Nachführen des Lichtstrahles im wesentlichen überall innerhalb der Wirkzone fokussiert bleibt.

## Beschreibung

Die Erfindung betrifft eine Perforationsvorrichtung zum Herstellen von Öffnungen in einer Umfangsoberfläche eines im wesentlichen länglichen, zylinderförmigen Gegenstandes, insbesondere einer Zigarette, mit einer Lichtquelle zum Erzeugen mindestens eines energiereichen Lichtstrahles, mit dessen Hilfe die Öffnungen in den Gegenstand einbringbar sind, mit einer durch ein Nachführmittel zum Nachführen des Lichtstrahles erzeugbaren Wirkzone, innerhalb derer der Lichtstrahl zum Einbringen der Öffnungen auf einen sich durch die Wirkzone bewegenden Gegenstand einwirkt, mit Rollmitteln zum Erzeugen einer Eigenrotationsbewegung der Gegenstände um ihre Längsachse während die Gegenstände sich durch die Wirkzone bewegen, um die Umfangsoberfläche dem Lichtstrahl auszusetzen, mit Transportmitteln zum Befördern des Gegenstandes durch die Wirkzone.

Derartige Vorrichtungen sind aus dem Stand der Technik bekannt. Solche Vorrichtungen dienen im Stand der Technik insbesondere in der tabakverarbeitenden Industrie dazu, Rauchartikel, insbesondere Zigaretten, mit einer Zone gewünschter Luftdurchlässigkeit zu versehen. Diese Zone gewünschter Luftdurchlässigkeit wird zumeist in einem Hüllmaterialstreifen des Rauchartikels bzw. der Zigarette eingearbeitet. Diese Perforierung der Umfangsoberfläche des Rauchartikels, die zumeist im Bereich des Mundstückendes vorgenommen wird, ist in der Zigarettenindustrie von Bedeutung, da durch derart perforierte Rauchartikel dem Rauch kühle Luft aus der Umgebung beigemischt wird, wenn an dem Rauchartikel bzw. der Zigarette gezogen wird. Diese kühle Luft dient wiederum dazu, die Anteile von Nikotin und Kondensat im Rauch zu beeinflussen.

Grundsätzlich wichtig bei dem Einbringen einer Perforierung in die Umfangsoberfläche eines im wesentlichen länglichen, zylinderförmigen Gegenstandes, insbesondere einer Zigarette, ist es, daß die Perforierung gleichmäßig und reproduzierbar eingebracht werden kann. Zu diesem Zweck werden im Stand der Technik als Lichtquelle zumeist Laser verwendet. Dabei kann mittels entsprechender Fokussierung des Laserstrahls die Lochgröße der Öffnungen in der Umfangsoberfläche verändert werden.

Als Transportmittel für die zu perforierenden Zigaretten werden im Stand der Technik zumeist Rolltrommeln u.dgl. verwendet. Diese Rolltrommeln fördern die Zigaretten queraxial durch den Auftreffpunkt des Laserstrahls hindurch. Um eine Perforierung nicht nur an einer Stelle auf der Umfangsoberfläche zu erzielen, sondern um die Perforierung zumindest über einen Teilumfang zu erhalten, wird die Zigarette, während sie queraxial von der als Transportmittel dienenden Rolltrommel befördert wird, zumeist mit Hilfe von Rollmitteln, die von der der Rolltrommel gegenüberliegenden Seite die Zigarette erfassen, gerollt. Wichtig ist bei einer derartigen Rollung zwischen zwei Flächen, daß die Zigarette bzw. der Rauchartikel möglichst wenig mit Druckkräften u.dgl. beaufschlagt wird. Denn derartige Kräfte beeinträchtigen die Qualität der Zigarette.

Eine bekannte Perforationsvorrichtung, die mit einem Laser arbeitet, ist bspw. aus der US 5,148,818 bekannt. In dieser Druckschrift ist eine Perforationsvorrichtung offenbart, die als Transportmittel für die Zigaretten mehrere Walzen verwendet. Auf diesen Walzen läuft ein als Rollmittel dienendes Förderband um, so daß sich die Zigaretten zwischen dem Förderband und den Walzen befinden. Dadurch, daß das Förderband mit einer anderen Geschwindigkeit als die Walzen läuft, werden die zwischen dem Förderband und den Walzen liegenden Zigaretten in eine Eigenrotationsbewegung versetzt. Weiterhin befindet sich in der Mitte einer der Walzen ein Laser mit ebenfalls rotierendem Laserstrahl, der in die rotierenden Zigaretten die Perforierung einbrennt.

Nachteilig bei diesem Stand der Technik ist es, daß der Laserstrahl mit einer der Walzen mitrotieren muß, und daß die Rotation des Laserstrahls exakt auf die Förderung der Zigaretten abgestimmt sein muß, wodurch sich insgesamt ein sehr hoher technischer und damit auch ein sehr hoher Kostenaufwand ergibt.

Ein weiterer Stand der Technik ist aus der DE 33 10 930 bekannt. In dieser Druckschrift ist eine Perforationsvorrichtung offenbart, bei der auf einer Trommel umlaufende Zigaretten mit Hilfe eines herzförmigen Reflektors, in welchem ein Laserstrahl umläuft, die entsprechenden Perforationen in die Umhüllung der zu perforierenden Zigaretten eingebracht werden.

Auch bei diesem Stand der Technik ist nachteiligerweise ein sehr hoher technischer Aufwand notwendig, um den Laserstrahl in dem herzförmigen Reflektor zu rotieren und um gleichzeitig die Zigaretten synchron mit der Rotation bzw. Reflektion des Laserstrahls an ihre richtige Position zu rotieren, so daß die Perforationen gleichmäßig in die Umhüllung eingebracht werden.

Noch ein weiterer Stand der Technik ist aus der DE 34 31 051 bekannt. In dieser Druckschrift ist ebenfalls ein Laser mit einer komplizierten Reflektorenanordnung verbunden. Auch hier wird der Laserstrahl über eine sehr aufwendige Anordnung von Spiegeln und rotierenden Reflektoren an die zu perforierende Stelle auf der Umhüllung der auf einer Walze umlaufenden Zigarette geleitet. Auch diese Vorrichtung ist extrem aufwendig und teuer und dazu auch nur sehr schwer zu synchronisieren.

Ein weiterer Stand der Technik ist aus der DE 34 31 067 bekannt. Diese Druckschrift stellt eine Kombination aus den beiden zuletzt genannten Druckschriften dar. Sie zeigt daher ebenfalls die in Bezug auf die beiden zuletzt genannten Druckschriften erläuterten Nachteile.

Eine weitere Perforationsvorrichtung ist aus der DE 42 18 266 bekannt. Bei dieser Vorrichtung befinden sich die geförderten Zigaretten zwischen mehreren Walzen, so daß sie zwischen diesen Walzen rotiert werden können. Auf der Förderwalze für die Zigaretten sitzt ein Polygonspiegel, welcher einen Laserstrahl auf die zu perforierenden Zigaretten wirft.

Auch hier ist es nachteilig, daß die Zigaretten mit Hilfe von aufwendigen Polygonspiegeln perforiert werden müssen. Darüber hinaus ist es bei dieser Vorrichtung nachteilig, daß die Zigaretten sich jeweils zwischen drei Walzen befinden, so daß sehr große Kräfte auf die einzelne Zigarette einwirken, welche sich nachteilig auf den Zustand der Zigarette auswirken können.

Schließlich ist aus der DE 27 51 522 eine weitere Perforationsvorrichtung bekannt geworden. Bei dieser Perforationsvorrichtung, welche den nächstliegenden Stand der Technik darstellt, werden die Zigaretten zwischen einer Rolltrommel und einem sogenannten Rollklotz zur Eigenrotation gebracht. Während dieser Eigenrotation werden die Zigaretten ebenfalls von einem Laserstrahl perforiert. Da sich die Zigaretten während ihrer Rollung zwischen der Rolltrommel und dem Rollklotz in dem so gebildeten Rollkanal relativ zu dem Laser fortbewegen, wird der Laserstrahl der in dem Rollkanal laufenden Zigarette nachgeführt. Diese Nachführung des Laserstrahls geschieht bei dieser Perforationsvorrichtung aus dem Stand der Technik mit Hilfe einer Trommel, die umfangsseitig eine Vielzahl von Spiegeln trägt. Dieser rotierende Polygonspiegel muß nun vollständig synchron mit dem Lauf der Zigaretten in dem durch den Rollklotz und die Rolltrommel gebildeten Rollkanal aktiviert werden. Auch bei diesem Stand der Technik ist daher ein sehr hohes Maß an Synchronisation und Präzision notwendig, um ein zufriedenstellendes Ergebnis der Perforation erzielen zu können.

Neben den soeben genannten Nachteilen ist es bei diesem Stand der Technik weiterhin nachteilig, daß die Perforationen nur während einer halben Eigenrotation der Zigarette in die Zigarette eingebracht werden können. Daher wird bei diesem Stand der Technik die Zigarette mit Hilfe des Laserstrahls vollständig durchstoßen. Nur so läßt sich bei diesem Stand der Technik eine Perforierung des gesamten Umfanges der Zigarette in dem Rollkanal bewerkstelligen. Eine solche Durchstoßung der Zigarette als Ganzes ist jedoch oftmals bei der Herstellung der Zigarette nicht erwünscht.

Aufgabe der vorliegenden Erfindung ist es daher, die oben genannten, im Stand der Technik auftretenden Nachteile zu vermeiden, und eine Perforationsvorrichtung zur Verfügung zu stellen, die bei minimalem technischen Aufwand und ohne komplizierte Synchronisation eine Perforierung des gesamten Umfanges der länglichen, zylinderförmigen Gegenstände, insbesondere von Zigaretten ermöglicht. Dabei soll weiterhin gewährleistet sein, daß die auf die Gegenstände während der Perforation einwirkenden Kräfte, insbesondere Kräfte durch die Rollmittel, so niedrig wie möglich gehalten werden.

Die vorstehende Aufgabe wird bei einer Perforationsvorrichtung der eingangs genannten Art erfindungsgemäß dadurch gelöst, daß ein stationäres Lichtbrechungsmittel vorgesehen ist, durch welches der zur Perforierung dienende Lichtstrahl vor dem Erreichen der eigentlichen Wirkzone hindurchgeführt wird, so daß der Lichtstrahl, wenn er dem durch die Wirkzone laufenden Gegenstand nachgeführt wird, im wesentlichen überall innerhalb der Wirkzone fokussiert bleibt.

Die Vorteile der Erfindung liegen insbesondere darin, daß mit Hilfe des erfindungsgemäßen Lichtbrechungsmittels auf aufwendige Spiegelkonstruktionen und auf aufwendige rotierende Spiegel verzichtet werden kann. Vielmehr reicht dank der Erfindung ein stationäres Lichtbrechungsmittel aus, durch welches der Lichtstrahl vor dem Erreichen der Wirkzone tritt, und durch welches der Lichtstrahl während der vollständigen Bewegung des Lichtstrahles mit Hilfe des Nachführmittels durch die Wirkzone hindurchtritt.

Bei der Erfindung ist es besonders vorteilhaft, wenn das Lichtbrechungsmittel eine Fokus-korrigierte Linse (F-Theta-Linse) ist. Mit Hilfe einer solchen Linse läßt sich die Erfindung besonders einfach verwirklichen. Denn eine derartige Linse kann bevorzugt mit ihrer Hauptebene parallel zum Transportweg der zu perforierenden Gegenstände derart angeordnet werden, daß die Linse während des gesamten Nachführbereiches des Lichtstrahles in dem Weg des Lichtstrahles zu der Wirkzone liegt. Dabei ist mit Hilfe der Fokus-korrigierten Linse (F-Theta-Linse) sichergestellt, daß der Lichtstrahl, insbesondere auch ein Laserstrahl während der gesamten Nachführbewegung zum Abdecken der Wirkzone von der Linse jeweils an jeder Stelle innerhalb der Wirkzone fokussiert auf den Gegenstand bzw. auf der Umfangsoberfläche des zu perforierenden Gegenstandes gelangt.

Dies liegt daran, daß die Fokus-korrigierte Linse (F-Theta-Linse) über ihre gesamte Breite entlang der Hauptebene die gleiche Brennweite zur Verfügung stellt. Bei einer derartigen Linse kann daher der Lichtstrahl bzw. der Laserstrahl über der Hauptebene verschoben werden, ohne daß sich die Brennweite und damit der Fokus des durch eine solche Linse tretenden Laserstrahls ändert. Der Laserstrahl kann daher mit Hilfe einer solchen Linse dem sich auf dem Querförderer rollend bewegenden Gegenstand nachgeführt werden, ohne daß er defokussiert wird.

Linsen, die die vorgenannten Vorteile der Erfindung verwirklichen, können bspw. von der Firma Laser Components GmbH in Olching, Deutschland, bezogen werden. Besonders vorteilhaft sind dabei die von dieser Firma angebotenen Plankonvexlinsen, Meniskus F-Theta-Planfeldlinsen und die sphärischen ZnSe-F-Theta-Planfeldlinsen.

Bei einer besonders bevorzugten Ausführungsform der Erfindung ist das Transportmittel als Querförderer ausgebildet. Dieser Querförderer kann in Ausführungsformen als Bandförderer oder als Rolltrommel ausgebildet sein. Der Querförderer befördert die zu perforierenden Gegenstände, insbesondere Zigaretten, mit ihren Längsachsen quer zur Förderrichtung.

Mit Hilfe eines derartigen Querförderers werden die zu perforierenden Gegenstände in die Wirkzone des Lichtstrahles gebracht. Innerhalb der mit dem Nachführmittel für den Lichtstrahl erzeugten Wirkzone des Lichtstrahles können dann die Perforierungen bzw. Öffnungen in die Umfangsoberfläche des Gegenstandes, welcher sich queraxial durch die Wirkzone hindurchbewegt, eingebracht werden. Während sich der Gegenstand durch die Wirkzone hindurchbewegt, wird der Lichtstrahl, insbesondere der Laserstrahl, mit Hilfe der Nachführmittel, die bevorzugt als Schwenkspiegel ausgebildet sind, nachgeführt. Somit ist sichergestellt, daß die zu perforierenden Gegenstände während ihrer gesamten Aufenthaltsdauer in der Wirkzone auch von der Lichtquelle erfaßt werden können, so daß während des gesamten Aufenthalts in der Wirkzone Perforierungen in die Umfangsoberfläche des Gegenstandes eingebracht werden können.

Sollen nun über den gesamten Umfang Perforierungen in den Gegenstand eingebracht werden, so muß der Gegenstand - während er sich durch die Wirkzone bewegt - rotiert werden. Dies wird mit Hilfe der eingangs genannten Rollmittel bewerkstelligt. Diese Rollmittel versetzen den Gegenstand in eine Eigenrotationsbewegung. Die Rollmittel sind bei einer bevorzugten Ausführungsform der Erfindung als eine dem Querförderer gegenüberliegende Gegenrollfläche ausgebildet. Diese Gegenrollfläche kann als Gegenrollband oder als Gegenrolltrommel ausgebildet sein. Dabei können die Förderrichtungen der Gegenrollfläche und des Querförderers entgegengesetzt oder gleichgerichtet sein. Bei gleichgerichteter Förderkomponente der Gegenrollfläche wird der zu perforierende Gegenstand im Zusammenwirkungsbereich von Querförderer und Gegenrollfläche bei der Rollung beschleunigt. Bei entgegengesetzten Förderkomponenten von Gegenrollfläche und Querförderer wird der zu perforierende Gegenstand im Zusammenwirkungabereich abgebremst. In beiden Fällen wird jedoch der Gegenstand in eine Rollbewegung auf dem Querförderer versetzt. Diese Rollbewegung kann relativ zum Querförderer stationär in einer für den Gegenstand vorgesehenen Ausnehmung stattfinden. Die Rollbewegung kann jedoch auch in einem dafür auf dem Querförderer vorgesehenen Rollbereich vorgenommen werden. Im letzteren Fall ist es bevorzugt, wenn der auf dem Querförderer vorgesehene Rollbereich jeweils von Erhebungen auf dem Querförderer begrenzt ist. Somit bewegt sich dann der zu perforierende Gegenstand im Augenblick des Zusammenwirkens von Gegenrollfläche und Querförderer von einer die Rollfläche begrenzenden Erhebung zur anderen. Wird bei einer derartigen Ausführungsform der gesamte Umfang des zu perforierenden Gegenstandes perforiert, so bewegt sich der Gegenstand zwischen den beiden Erhebungen einmal um seine Achse. Dabei wird dann der den Gegenstand perforierende Lichtstrahl bzw. Laserstrahl entsprechend der Bewegung des Gegenstandes über die Rollfläche an dem Querförderer dem Gegenstand nachgeführt, um diesen voll umfangsseitig zu perforieren.

Bei einer anderen bevorzugten Ausführungsform der Erfindung, bei der sich die zu perforierenden Gegenstände relativ zum Querförderer stationär in Ausnehmungen im Querförderer befinden, ist als Rollmittel nicht nur eine Gegenrollfläche - wie oben erläutert - vorgesehen, sondern es ist der Gegenrollfläche gegenüberliegend noch eine weitere Rollfläche vorgesehen. Auch diese Rollfläche kann als Rollband oder Rolltrommel ausgebildet sein. Diese zweite Rollfläche tritt in der Wirkzone, d.h. im Zusammenwirkungsbereich zwischen Gegenrollfläche und Querförderer von der der Gegenrollfläche gegenüberliegenden Seite an die zu perforierenden Gegenstände heran. Es kommt daher bei dieser Ausführungsform zu einem Zusammenwirken in der Wirkzone von Gegenrollfläche und Rollfläche. Dabei ist es besonders bevorzugt, wenn die Rollfläche eine Förderkomponente aufweist, die der des Querförderers entgegengesetzt ist, während die Gegenrollfläche eine dem Querförderer gleichgerichtete Förderkomponente aufweist. Auf diese Art und Weise wird der zu perforierende Gegenstand, insbesondere die zu perforierende Zigarette, in der Wirkzone diametral entgegengesetzt jeweils von entgegengesetzten Förderkräften beaufschlagt, so daß sie sich in der Ausnehmung auf dem Querförderer dreht.

Eine weitere bevorzugte Ausführungsform der vorliegenden Erfindung zeichnet sich dadurch aus, daß das Rollmittel ein integraler Bestandteil des Transportmittels ist. Bei dieser Ausführungsform ist es weiter bevorzugt, wenn das Transportmittel ein Querförderer ist, auf welchem Querförderer die Gegenstände queraxional gefördert werden, wobei der Querförderer Aufnahmen zur Aufnahme der Gegenstände aufweist. Diese Aufnahmen zeichnen sich bei dieser Ausführungsform bevorzugt dadurch aus, daß sie zum Erzeugen der Eigenrotationsbewegung der Gegenstände um ihre Längsachse rotierbar sind. Dabei sind die Aufnahmen bevorzugt als Mulden ausgebildet, welche Mulden bevorzugt mit Saugluft beaufschlagt sind, um die Gegenstände in den Mulden auch während der Eigenrotationsbewegung der Mulden bzw. der Gegenstände zu halten. Die Vorteile dieser Ausführungsform liegen insbesondere darin, daß mit Hilfe dieser Ausführungsform jeder einzelne Gegenstand präzise rotiert werden kann. Bei dieser Ausführungsform gibt es daher bei der Rotationsbewegung des Gegenstandes keine erheblichen Ungenauigkeiten. Auf diese Weise lassen sich daher dank dieser Ausführungsform die Perforationen in die Gegenstände an genau vorhersehbaren Punkten präzise einbringen. Weiterhin ist es bei dieser Ausführungsform vorteilhaft, daß durch die Tatsache, daß jeder Gegenstand in seiner eigenen Aufnahme liegt, Interaktionen der Gegenstände untereinander völlig ausgeschlossen sind, so daß sich diese Ausführungsform durch eine besonders hohe Zuverlässigkeit auszeichnet.

Bei einer weiteren bevorzugten Ausführungsform der Erfindung sind die vorgenannten Aufnahmen direkt an einer Transporttrommel drehbar gelagert. Dabei werden die Gegenstände bevorzugt von einer Zufördertrommel direkt an die Transporttrommel übergeben, durch die Wirkzone des Lichtstrahls hindurchgeführt, und direkt von der Transporttrommel wieder an eine Abfördertrommel oder ein anderes Arbeitsgerät übergeben. Auf diese Weise läßt sich mit Hilfe dieser Ausführungsform die Rolle des Transportmittels mit der des Rollmittels optimal vereinen, so daß insgesamt auch eine Verkürzung der Baulänge eines derart ausgebildeten Perforationsgerätes erreicht wird.

Bei einer weiter bevorzugten Ausführungsform der vorliegenden Erfindung weist die Transporttrommel eine bestimmte Teilung auf, wobei die Gegenstände innerhalb einer Rotation der Transporttrommel um eine Teilung einmal um ihre Achse rotierbar sind. Auf diese Weise läßt sich die komplette Perforation innerhalb der Rotation der Rotationstrommel um eine Teilung realisieren. Auf diese Weise wird auch die notwendige Nachführbewegung des Lichtstrahls auf ein notwendiges Minimum reduziert.

Bei einer weiter bevorzugten Ausführungsform der Erfindung sind die Lichtquelle, und/oder die Nachführmittel, und/oder die Lichtbrechungsmittel innerhalb der Transportrommel angeordnet. Auch bei dieser Ausführungsform wird daher vorteilhaft die Baugröße der erfindungsgemäßen Perforationsvorrichtung verringert.

Darüber hinaus ist diese Ausführungsform vorteilhaft, da die Lichtquelle, wenn sie aus dem Inneren der Transporttrommel auf die zu perforierenden Gegenstände einwirkt, auch während der Nachführbewegung einen Lichtweg zwischen sich und den zu perforierenden Gegenständen aufweist, der in etwa gleich bleibt, da die Gegenstände auf einer kreisförmigen Bahn bewegt werden.

Eine weitere bevorzugte Ausführungsform der Erfindung weist entlang des Umfangs der Transporttrommel zwei sich spiegelbildlich gegenüberliegende Reihen von Aufnahmen mit einem bestimmten Teilungsabstand zueinander auf. Auf diese Weise läßt sich vorteilhaft die doppelte Anzahl von Gegenständen gleichzeitig perforieren, wenn die Lichtquelle beispielsweise durch einen Strahlteiler ebenfalls aufgeteilt ist oder wenn zwei Lichtquellen vorgesehen sind.

Eine weitere bevorzugte Ausführungsform der Erfindung, bei der jeweils zwei spiegelbildlich gegenüberliegende Aufnahmen mit Hilfe von Rotationsmitteln rotierbar sind, zeichnet sich dadurch aus, daß die Rotationsmittel jeweils an den Aufnahmen befestigte Ritzel umfassen, welche Ritzel jeweils mit einem auf einer gemeinsamen Antriebswelle angeordneten Zahnrad kämmen. Auf diese Weise läßt sich vorteilhaft mit Hilfe einer einzigen Antriebswelle der Antrieb für zwei gegenüberliegende Aufnahmen realisieren.

Bei dieser Ausführungsform ist es weiter bevorzugt, wenn die Antriebswelle von einem an einer der Stirninnenseiten der Transporttrommel angeordneten Steuermittel antreibbar ist, welches Steuermittel über ein Zahnrad ein Ritzel der Antriebswelle treibt. Auch diese Ausführungsform zeichnet sich vorteilhaft durch eine geringe Baugröße auf, in dem die Steuermittel ebenfalls innerhalb der Transporttrommel angeordnet sind. Dabei ist es weiter bevorzugt, wenn das Steuermittel ein Hebel ist, der in einer ortsfesten Steuerkurve geführt wird, welche Steuerkurve weiter bevorzugt als U-förmige Nut in einer der Stirnwandinnenseiten der Transporttrommel ausgebildet ist. Durch eine solche U-förmige Nut ist es vorteilhaft möglich, den als Steuermittel dienenden Hebel jeder Zeit präzise zu führen.

Bei einer weiteren bevorzugten Ausführungsform der vorliegenden Erfindung sind die vorgenannten, entlang des Umfangs der Transporttrommel benachbarten Aufnahmen der Reihen von Aufnahmen jeweils mit einem eigenen Rotationsmittel bzw. Antriebsmittel versehen. Dabei ist es weiter bevorzugt, wenn entlang des Umfangs der Transporttrommel benachbarte Aufnahmen jeweils ein eigenes Steuermittel aufweisen. So kann bei dieser Ausführungsform jede entlang des Umfangs benachbarte Aufnahme vorteilhaft getrennt voneinander und gezielt bewegt werden.

Eine weitere bevorzugte Ausführungsform der Erfindung zeichnet sich dadurch aus, daß die Aufnahmen mit Hilfe der Rotationsmittel derart rotierbar sind, daß die Eigenrotationsbewegung zumindest während der Bewegung der Gegenstände durch die Wirkzone stattfindet. Dabei ist es weiter bevorzugt, wenn die Eigenrotationsbewegung im wesentlichen nur während der Bewegung der Gegenstände durch die Wirkzone stattfindet. Auf diese Weise werden die Gegenstände nur während der Bewegung durch die Wirkzone mit der Rotationsbewegung belastet. Dabei ist es weiter bevorzugt, wenn die Eigenrotationsbewegung während der Bewegung der Gegenstände durch die Wirkzone gleichförmig, d.h. bevorzugt mit gleichbleibender Winkelgeschwindigkeit verläuft. So können mit Hilfe dieser Ausführungsform die Gegenstände während der Bewegung durch die Wirkzone mit konstanter Rotationsgeschwindigkeit um 360 Grad rotiert werden, und anschließend wieder zur Ruhe gebracht werden. Dabei ist es weiter bevorzugt, wenn die Gegenstände vor dem Erreichen der Wirkzone auf die notwendige Rotationsgeschwindigkeit beschleunigbar, und nach dem Erreichen des Endes der Wirkzone wieder in ihre Ruhelage abbremsbar sind. Dabei verlaufen die Beschleunigungs- und Abbremsbewegungen bevorzugt im wesentlichen linear.

Weitere bevorzugte Ausführungsformen der Erfindung sind in den Unteransprüchen angegeben.

Mehrere Ausführungsbeispiele der Erfindung sollen nun auch anhand der Zeichnungen erläutert werden. In der Zeichnung zeigen die einzelnen Figuren:
- Fig. 1: zeigt einen Teilquerschnitt mit schematischen Anteilen, welcher eine Perforationsvorrichtung mit als Rolltrommel ausgebildeten Transportmitteln darstellt;
- Fig. 2: zeigt einen Schnitt A-A durch die Perforationsvorrichtung der Fig. 1;
- Fig. 3: zeigt einen Teilquerschnitt mit schematischem Anteil einer zweiten Ausführungsform einer Perforationsvorrichtung mit als Rolltrommel ausgebildeten Rollmitteln;
- Fig. 4: zeigt einen Schnitt B-B durch die Perforationsvorrichtung der Fig. 3;
- Fig. 5: zeigt einen Teilquerschnitt mit schematischem Anteil durch eine dritte Ausführungsform einer erfindungsgemäßen Perforationsvorrichtung mit als Rolltrommel ausgebildeten Transportmitteln;
- Fig. 6: zeigt einen Schnitt C-C durch die Perforationsvorrichtung der Fig. 5;
- Fig. 7: zeigt einen Teilquerschnitt mit schematischem Anteil durch eine vierte Ausführungsform der erfindungsgemäßen Perforationsvorrichtung, bei der Transportmittel als Förderband ausgebildet sind;
- Fig. 8: zeigt einen Schnitt D-D durch die Perforationsvorrichtung der Fig. 7;
- Fig. 9: zeigt einen Teilquerschnitt mit schematischem Anteil durch eine fünfte Ausführungsform der erfindungsgemäßen Perforationsvorrichtung, bei der die Transportmittel als Bandförderer ausgebildet sind;
- Fig. 10: zeigt einen Schnitt E-E durch die Perforationsvorrichtung der Fig. 9;
- Fig. 11: zeigt eine schematische Darstellung einer bei der Erfindung verwendeten F-Theta-Linse mit einem schematischen Strahlengang;
- Fig. 12: zeigt einen Teilquerschnitt mit schematischem Anteil durch eine sechste Ausführungsform der erfindungsgemäßen Perforationsvorrichtung, bei der das Transportmittel als Rollband ausgebildet ist;
- Fig. 13: zeigt einen Schnitt F-F durch die Perforationsvorrichtung der Fig. 12;
- Fig. 14: zeigt eine siebte Ausführungsform der erfindungsgemäßen Perforationsvorrichtung, bei der das Rollband als Transportmittel ausgebildet ist, und bei der zwei Wirkzonen vorgesehen sind;
- Fig. 15: zeigt einen Schnitt G-G durch die Perforationsvorrichtung der Fig. 14;
- Fig. 16: zeigt eine schematische Seitenansicht einer weiteren Ausführungsform der Perforationsvorrichtung;
- Fig. 17: zeigt eine schematische Prinzipskizze der Perforationsvorrichtung gemäß Fig. 16;
- Fig. 18: zeigt einen Graph des zeitlichen Verlaufs der Rotationsgeschwindigkeit der Mulden gemäß Fig. 17;
- Fig. 19: zeigt eine schematische Ansicht einer weiteren Ausführungsform einer Perforationsvorrichtung;
- Fig. 20: zeigt eine schematische Funktionsprinzipskizze der Ausführungsform gemäß Fig. 19;
- Fig. 21: zeigt einen Graph des zeitlichen Verlaufes der Rotationsgeschwindigkeit der Mulden der Fig. 20;
- Fig. 22: zeigt einen Schnitt durch die in der Fig. 19 dargestellte Transporttrommel; und
- Fig. 23: zeigt den Schnitt der Fig. 22 einschließlich der in der Fig. 19 oben dargestellten Lasernachführ- und Fokussiereinrichtungen.

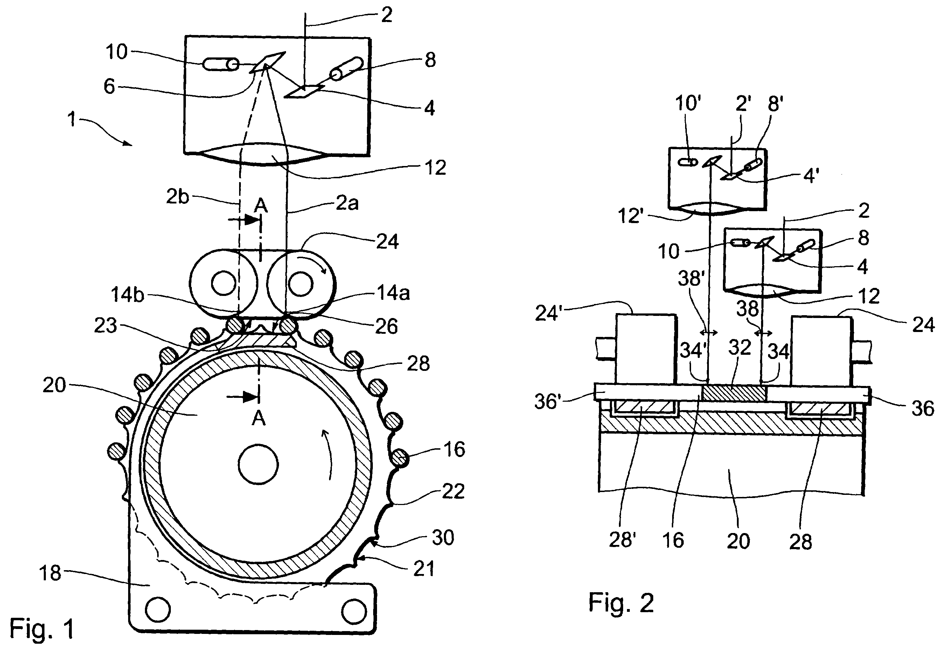

Die Fig. 1 zeigt eine Perforationsvorrichtung 1. Die Perforationsvorrichtung 1 weist einen (nicht dargestellten) Laser als Lichtquelle auf. Dieser Laser sendet als energiereichen Lichtstrahl einen synchron zur Maschinengeschwindigkeit gepulsten Laserstrahl 2 aus. Der Laserstrahl 2 gelangt über einen ersten Schwenkspiegel 4 zu einem Schwenkspiegel 6 und von dort aus in Richtung auf die zu perforierenden Gegenstände 16. Der erste Schwenkspiegel 4 wird von einem Antriebsmotor 8 bewegt. Der zweite Schwenkspiegel 6 wird von einem Antriebsmotor 10 bewegt. Der erste Schwenkspiegel 4 dient dazu, den Laserstrahl 2 entlang der Längsachse der zu perforierenden Gegenstände 16 zu verschwenken und so den Ort der Perforation einzustellen bzw. an die Art der Gegenstände, insbesondere deren Länge, anzupassen. Der Schwenkspiegel 6 dient als Nachführmittel zum Nachführen des Laserstrahls 2, um so eine Wirkzone des Laserstrahls 2 zu erzeugen, innerhalb derer der Laserstrahl 2 die (nicht dargestellten) Öffnungen auf einen sich durch die Wirkzone bewegenden Gegenstand 16 bringen kann. In der Fig. 1 ist die Ausdehnung der Wirkzone in Bewegungsrichtung der Gegenstände 16 durch den durchgezogenen Laserstrahl 2a und den gestrichelt dargestellten Laserstrahl 2b dargestellt. Mit anderen Worten kann der Schwenkspiegel 6 den Laserstrahl 2 zwischen den Extrempositionen 2a und 2b verschwenken, um den Laserstrahl 2 dem sich bewegenden Gegenstand nachzuführen.

Nach der Reflektion des Laserstrahls 2 durch den zweiten Schwenkspiegel 6 trifft der Laserstrahl 2 auf eine Fokus-korrigierte Linse (F-Theta-Linse) 12. Von der F-Theta-Linse 12 wird der Laserstrahl 2 derart fokussiert, daß er an den durch die Pfeilspitzen 14a bzw. 14b angedeuteten Auftreffpunkten auf den zu perforierenden Gegenständen derart fokussiert ist, daß er die gewünschten Durchmesser der Öffnungen in die Umhüllung der Gegenstände 16 perforieren kann.

Bei den zu perforierenden Gegenständen 16 handelt es sich in der Fig. 1 um Doppelfilterzigaretten 16. Diese Doppelfilterzigaretten 16 werden von einer in einem Gestell 18 rotierenden Rolltrommel 20 in die Wirkzone des Laserstrahls 2 gefördert. Dabei dreht sich die Rolltrommel 20 gemäß Fig. 1 im Gegenuhrzeigersinn.

Die Doppelfilterzigaretten 16 werden an der Rolltrommel mit Hilfe von (nicht dargestellten) Saugvorrichtungen gehalten. Bevor die Doppelfilterzigaretten 16 in die durch die extremen Laserstrahlpositionen 2a und 2b begrenzte Wirkzone zwischen den Punkten 14a und 14b gelangen, befinden sie sich auf einer in Rolltrommeldrehrichtung der Wirkzone zugewandten Flanke 21 von Erhebungen 22 auf der Umfangsoberfläche der Rolltrommel 20.

Gelangen die Doppelfilterzigaretten 16 durch die Drehbewegung der Rolltrommel 20 an den in der Fig. 1 ganz rechts dargestellten extremen Auftreffpunkt 14a des Laserstrahls 2a, so werden sie in der Fig. 1 von oben von einem als Rollmittel zum Erzeugen einer Eigenrotationsbewegung der Doppelfilterzigaretten 16 dienenden, eine Gegenrollfläche 23 aufweisenden Gegenrollband 24 erfaßt. Das Gegenrollband 24 weist an dem Auftreffpunkt 14a die gleiche Förderrichtung wie die Rolltrommel 20 auf. Gleichzeitig werden die Doppelfilterzigaretten 16 in der Fig. 1 von unten von einer ebenfalls als Rollmittel dienenden Rollfläche 26 erfaßt. Diese Rollfläche 26 ist auf einem Rollklotz 28 ausgebildet. Die Rollfläche 26 verläuft parallel zur Gegenrollfläche 23.

Um die Doppelfilterzigarette 16 nun zu rollen, weist das Gegenrollband 24 eine höhere Fördergeschwindigkeit als die Rolltrommel 20 auf. Somit wird die an den Punkt 14a gelangte Doppelfilterzigarette 16 zwischen den Punkten 14a und 14b in eine Eigenrotation um ihre Längsachse versetzt, während sie zwischen der Rollfläche 26 und der Gegenrollfläche 23 gerollt wird.

Aufgrund der höheren Fördergeschwindigkeit des Gegenrollbandes 24 gegenüber der Rolltrommel 20 gelangt die Doppelfilterzigarette 16 darüber hinaus auch von der Flanke 21 der Erhebung 22 zu der gegenüberliegenden Flanke 30 der in Förderrichtung der Rolltrommel 20 nächstliegenden Erhebung 22. Diese Position an der gegenüberliegenden Flanke 30 erreicht die Doppelfilterzigarette 16 genau zu dem Zeitpunkt, zu dem sie an dem anderen extremen Ende der Wirkzone, nämlich an dem Punkt 14b angelangt ist. In der Zwischenzeit hat die Doppelfilterzigarette 16 in der Wirkzone zwischen den Punkten 14a und 14b eine vollständige Eigenrotation einmal um ihre eigene Achse hinter sich gebracht. Während dessen wurde der Laserstrahl 2 von der extremen Position 2a (Auftreffpunkt 14a) und der extremen Position 2b (Auftreffpunkt 14b) mit Hilfe des zweiten Schwenkspiegels 6 der Bewegung der Doppelfilterzigarette 16 mit Hilfe nicht dargestellter Synchronisationsmittel nachgeführt. Während des Nachführens des Laserstrahls 2 mit Hilfe des Schwenkspiegels 6 bleibt der Laserstrahl 2 ständig in der Ebene der Gegenrollfläche 23 in der entsprechend an der Umhüllung der Gegenstände 16 gewünschten Öffnungsgröße fokussiert, da er während der gesamten Nachführbewegung durch die Fokus-korrigierte Linse (F-Theta-Linse) 12 tritt. Auf diese Art und Weise läßt sich mit Hilfe der in der Fig. 1 dargestellten Perforationsvorrichtung 1 eine um den gesamten Umfang verlaufende Perforierung der Umhüllung der Doppelfilterzigarette 16 erreichen.

Mit Hilfe des ersten Schwenkspiegels 4, angetrieben durch den Schwenkmotor 8, kann der Laserstrahl 2 darüber hinaus auch parallel zur Längsachse der Doppelfilterzigaretten 16 verschoben werden. Auf diese Weise kann die Position des Auftreffpunktes 14a auf dem zu perforierenden Gegenstand 16 gemäß Fig. 1 senkrecht zur Bildebene verschoben werden. Der Schwenkspiegel 4 dient daher der Einstellung des Perforationsortes auf dem Gegenstand 16.

Auch können - wenn erforderlich - auch zwei oder mehrere parallele Perforierungsspuren auf dem Gegenstand 16 oder seiner Umhüllung umfangsseitig angebracht werden. Dabei ist der nicht dargestellte Laser in seiner Leistung auch derart veränderbar, daß der Laserstrahl 2 beim Auftreffen auf den zu perforierenden Gegenstand 16 diesen Gegenstand 16 vollständig durchdringt, so daß in den Gegenstand 16 durchgehende Löcher eingebracht werden können.

Bei einer anderen nicht dargestellten Ausführungsform ist der Laser abschaltbar, so daß der Gegenstand 16 nur auf einem Teilumfang perforiert wird.

Bei der in der Fig. 1 links dargestellten Extremposition 14b verläßt die dann perforierte Doppelfilterzigarette 16 die zwischen den Punkten 14a und 14b liegende Wirkzone des Laserstrahls 2 bzw. den zwischen den Punkten 14a und 14b liegenden Rollkanal zwischen den Flächen 23 und 26, um von dem als Rolltrommel 20 ausgebildeten Querförderer weiter transportiert zu werden. Bei diesem Weitertransport wird die Doppelfilterzigarette 16 ebenso wie an der ersten Flanke 21 auch an der gegenüberliegenden Flanke von einer nicht dargestellten Saugvorrichtung an der Umfangsoberfläche der Rolltrommel 20 festgehalten.

Die Fig. 2 zeigt einen Schnitt der Perforationsvorrichtung der Fig. 1 entlang der Linie A-A. Gleiche Bezugszeichen bezeichnen gleiche Teile. Der Schnitt zeigt eine Doppelfilterzigarette 16 während sie sich in der Wirkzone zwischen Punkten 14a und 14b der Fig. 1 befindet. Die Doppelfilterzigarette 16 befindet sich - wie üblich - mit dem Filterabschnitt 32 in der Mitte in dem durch die Rollklötze 28 und 28' (gestrichene Bezugszeichen bezeichnen gleiche, jedoch doppelt vorhandene Teile) und die Gegenrollbänder 24 und 24' gebildeten Rollkanal. Der Filterabschnitt 32 wird gemäß Fig. 2 von zwei Laserstrahlen 2 und 2' beaufschlagt. Dabei tritt jeder Laserstrahl 2, 2' jeweils durch Fokus-korrigierte Linsen (F-Theta-Linsen) 12, 12'. Die Auftreffpunkte 34 und 34' der Laserstrahlen 2, 2' auf der Doppelfilterzigarette 16 bzw. auf dem Filterabschnitt 32 sind so gewählt, daß diese Auftreffpunkte 34, 34' in dem dem jeweiligen tabakhaltigen Abschnitt 36 bzw. 36' der Doppelfilterzigarette 16 zugewandten Ende des Filterabschnittes 32 liegen. Dabei läßt sich mit Hilfe der Schwenkspiegel 4, 4' die Position der Auftreffpunkte 34, 34' entlang der Längsachse der Doppelfilterzigarette 16 gemäß den in der Fig. 2 dargestellten Pfeilen 38, 38' verschieben.

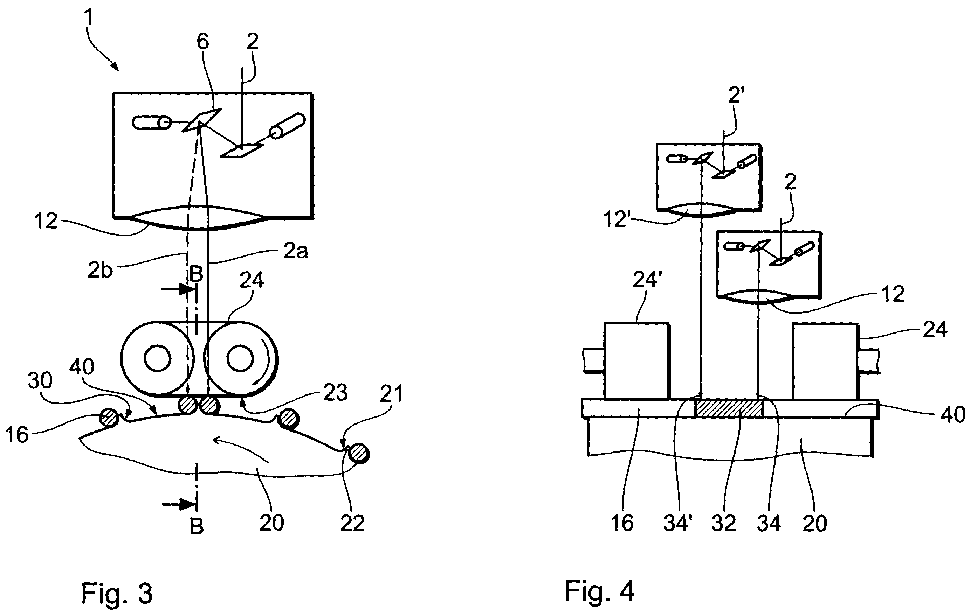

Die Fig. 3 zeigt ebenfalls eine Perforationsvorrichtung 1. Auch hier sind gleiche Teile mit gleichen Bezugszeichen bezeichnet. Auch diese Perforationsvorrichtung 1 weist eine Rolltrommel 20 mit einer Reihe von Erhebungen 22 auf. Der Bereich zwischen den Erhebungen 22 ist jedoch als Rollabschnitt 40 ausgebildet. Demnach kann in der Perforationsvorrichtung 1 der Fig. 3 die zu perforierende Doppelfilterzigarette 16 unter Zuhilfenahme des Rollabschnittes 40 als Rollfläche und der Gegenrollfläche 23 des Gegenrollbandes 24 gerollt werden. Im Unterschied zu der Rollung gemäß der Ausführungsform gemäß Fig. 1 wird jedoch bei dieser Ausführungsform die Fördergeschwindigkeit der Rolltrommel 20 höher als die des Gegenrollbandes 24 gewählt. Das Gegenrollband 24 bremst daher die in dieser Ausführungsform an der gegenüberliegenden Flanke liegende Doppelfilterzigarette 16 ab, so daß diese über den an der Rolltrommel 20 vorgesehenen Rollabschnitt 40 relativ zu der Rolltrommel 20 zurückrollt, so daß sie schließlich an der in Förderrichtung der Rolltrommel 20 vorne liegenden Flanke 21 der Erhebung 22 zu liegen kommt. Auch bei dieser Ausführungsform werden die Doppelfilterzigaretten 16 an den jeweiligen Flanken 21, 30 der Erhebungen 22 mit Hilfe Saugöffnungen oder dergleichen gehalten.

Die Doppelfilterzigarette 16 bewegt sich jedoch nur relativ zur Rolltrommel 20 bzw. zum Rollabschnitt 40 rückwärts. Im Ortsraum bewegt sie sich jedoch - wenn auch mit verminderter Geschwindigkeit - vorwärts, so daß auch bei dieser Ausführungsform der Laserstrahl 2 von einer die Anfangsposition der Wirkzone markierenden Position 2a mit Hilfe des Schwenkspiegels 6 bis zu einer die Endposition der Wirkzone markierenden Position 2b nachgeführt werden muß. Allerdings ist bei dieser Ausführungsform die Wirkzone, d.h. der Bereich der Nachführung des Laserstrahls 2 erheblich kürzer als bei der in Fig. 1 dargestellten Ausführungsform.

Die Fig. 4 zeigt einen Schnitt der Ausführungsform gemäß Fig. 3 entlang der Linie B-B. Auch hier sind gleiche Teile mit gleichen Bezugszeichen bezeichnet. Auch hier ist ebenso wie bei der Ausführungsform gemäß den Fig. 1 und 2 an den jeweiligen Enden des Filterabschnittes 32 ein Auftreffpunkt 34 bzw. 34' der Laserstrahlen 2 und 2' vorgesehen, so daß auch hier an den jeweiligen Enden des Filterabschnittes 32 Perforationslinien bzw. Ketten von Perforationsöffnungen in die Filterumhüllung der Doppelfilterzigarette 16 eingebracht werden können. Gemäß Fig. 4 ist zu erkennen, daß sich der Rollabschnitt 40 fast über die gesamte Länge der Doppelfilterzigarette 16 erstreckt. Die Gegenrollbänder 24 bzw. 24', die dann zusammen mit dem Rollabschnitt 40 den Rollkanal für die Doppelfilterzigarette 16 bilden, sind gegenüber der Ausführungsformen der Fig. 1 und 2 unverändert.

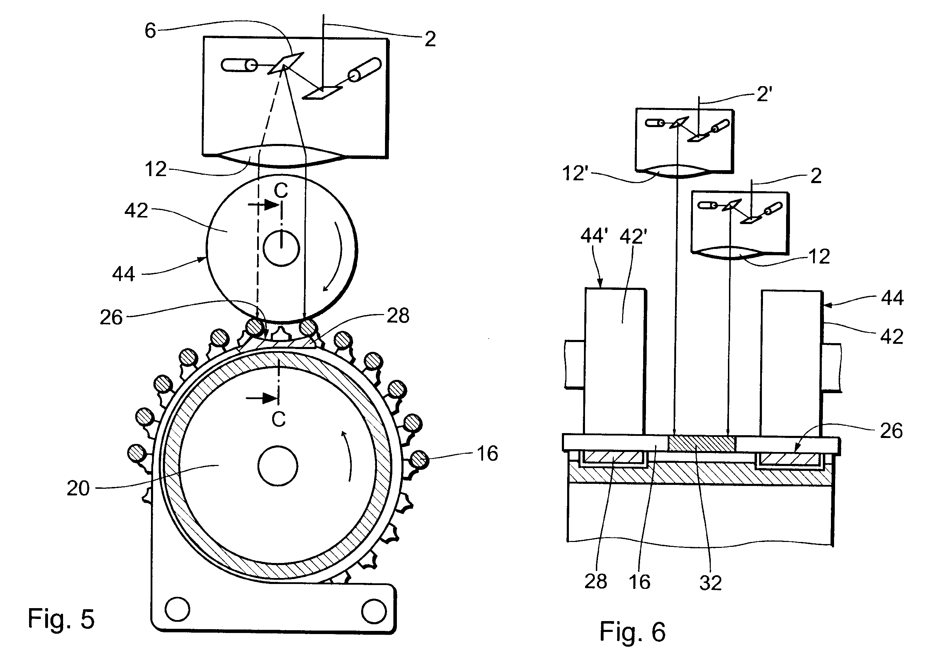

Die Fig. 5 zeigt eine weitere Ausführungsform einer erfindungsgemäßen Perforationsvorrichtung 1. Auch hier werden gleiche Teile mit gleichen Bezugszeichen bezeichnet. Das Besondere an dieser Ausführungsform ist, daß die zu perforierenden Gegenstände 16 nicht zwischen einer Oberfläche eines Rollklotzes 28 und einem gegenüberliegenden Gegenrollband 24 gerollt werden, wie dies bei den Ausführungsformen der Fig. 1 bis 4 der Fall ist, sondern daß bei dieser Ausführungsform die Doppelfilterzigarette 16 zwischen einem Rollklotz 28 und einer Gegenrolltrommel 42 abgerollt werden. Da eine Rolltrommel 42 keine ebenen Oberflächen aufweist, ist der Rollklotz 28 bzw. seine Oberfläche 26 entsprechend der Krümmung der Oberfläche 44 der Gegenrolltrommel 42 gekrümmt. Es wird daher auch hier, wie auch aus der Fig. 6 zu erkennen ist, ein Rollkanal zwischen der Oberfläche 26 des Rollklotzes 28 und der Oberfläche 44 der Gegenrolltrommel 42 gebildet.

Bei dieser Ausführungsform läuft die Gegenrolltrommel 42 ebenfalls - wie in der Ausführungsform der Fig. 1 und 2-mit einer höheren Fördergeschwindigkeit als die Rolltrommel 20. Demnach wird auch hier die Doppelfilterzigarette 16 in Förderrichtung auf der Rollfläche 26 des Rollklotzes 28 durch die Gegenrolltrommel 42 vorwärts gerollt. Auch hier wird der Laserstrahl 2 von dem Schwenkspiegel 6 der Bewegung der rollenden Doppelfilterzigarette 16 durch den durch die Oberflächen 26 und 44 gebildeten Rollkanal nachgeführt.

Gemäß Fig. 6 sind auch bei dieser Ausführungsform zwei Laser vorgesehen, die mit ihren Laserstrahlen 2, 2' zwei Perforationslinien in den Filterabschnitt 32 einbringen.

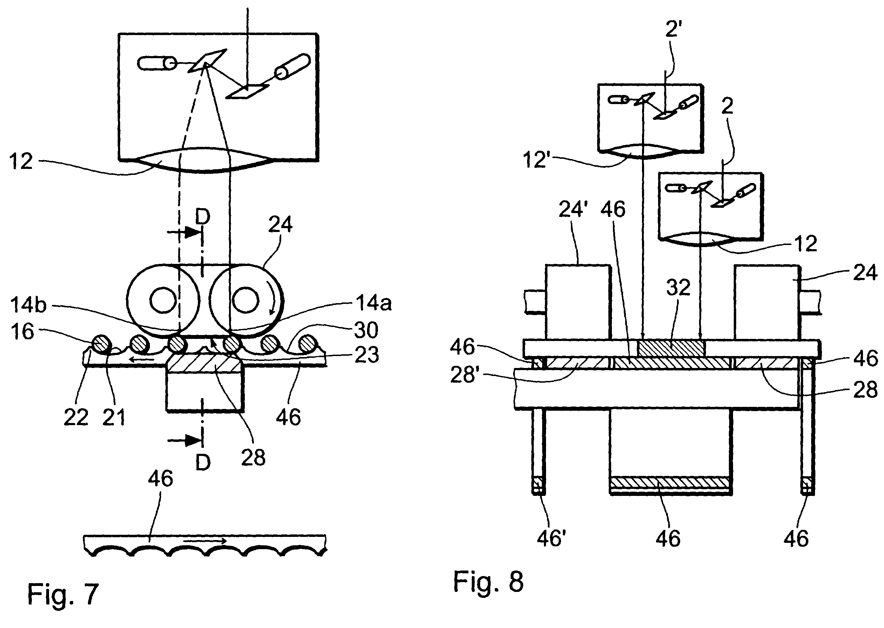

Die Fig. 7 zeigt eine weitere Ausführungsform der erfindungsgemäßen Perforationsvorrichtung 1. Bei dieser Perforationsvorrichtung 1 werden die Doppelfilterzigaretten 16 (auch hier sind gleiche Teile mit gleichen Bezugszeichen bezeichnet) von einem als Bandförderer 46 ausgebildeten Querförderer queraxial gefördert. Wie auch in der Ausführungsform gemäß den Fig. 1 und 2 ist auch hier ein Gegenrollband 24 mit einer Gegenrollfläche 23 vorgesehen. Die Gegenrollfäche 23 wirkt zusammen mit einem auch hier vorgesehenen Rollklotz 28 bzw. seiner Rollfläche 26 als Rollkanal für die zu perforierenden Doppelfilterzigaretten 16. Auch bei dieser Ausführungsform ist die Fördergeschwindigkeit des Gegenrollbandes 24 größer als die des Bandförderers 46, so daß die Doppelfilterzigaretten 16 bei Erreichen der Wirkzone an dem Punkt 14a in Vorwärtsrichtung über den Rollklotz 28 von der ersten Flanke 21 der Erhebungen zu der gegenüberliegenden Flanke 30 der Erhebungen 22 gerollt werden. Auch hier werden die Doppelfilterzigaretten 16 an ihren Positionen an den Flanken 21 und 30 mit Hilfe von nicht dargestellten Sauglöchern gehalten.

Die Fig. 8 zeigt einen Schnitt entlang der Linie D-D der Fig. 7. Zu erkennen ist, daß das Förderband 46 in der in der Fig. 8 dargestellten Situation außer Kontakt mit der Doppelfilterzigarette 16 ist, weil diese sich in dem durch die Rollklötze 28, 28' und die Gegenrollbänder 24, 24' gebildeten Rollkanal befindet.

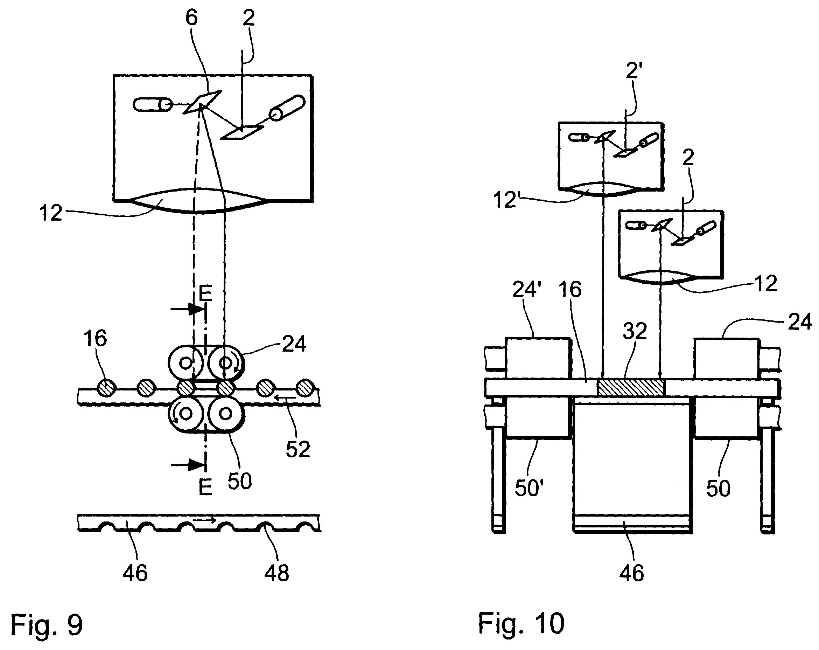

Die Fig. 9 zeigt noch eine weitere Ausführungsform einer erfindungsgemäßen Perforationsvorrichtung 1. Wie in der Ausführungsform gemäß den Fig. 7 und 8 ist hier ein Bandförderer 46 vorgesehen. Das Besondere an dieser Ausführungsform ist, daß die Doppelfilterzigaretten 16 sich in Ausnehmungen 48 in dem Bandförderer 46 liegend befinden. Die Doppelfilterzigaretten 16 werden daher im Rollkanal relativ zum Bandförderer 46 mit unveränderter Förderkomponente auf der Stelle gerollt. Der Rollkanal wird bei dieser Ausführungsform nicht nur von einem Gegenrollband 24 sondern darüber hinaus von einem dem Gegenrollband 24 gegenüberliegenden Rollband 50 bzw. zwischen den jeweiligen Oberflächen gebildet. Dabei weist das Gegenrollband 24, wie auch bei den vorhergegangenen Ausführungsformen mit Gegenrollbändern, eine innerhalb der Wirkzone der Förderrichtung 52 des Bandförderers 46 entsprechende Förderrichtung auf. Demgegenüber weist das Rollband 50 eine innerhalb der Wirkzone der Förderrichtung 52 des Bandförderers 46 entgegengesetzte Förderrichtung auf. Die Doppelfilterzigaretten 16 werden daher in der Ausführungsform gemäß Fig. 9 im Gegenuhrzeigersinn in den Ausnehmungen 48 liegend gerollt. Da sich während dieser relativ zum Bandförderer 46 stationären Rollung die Doppelfilterzigaretten 16 somit mit der Fördergeschwindigkeit 52 des Bandförderers 46 durch den Rollkanal zwischen den Bändern 24 und 50 bewegen, muß auch hier der Laserstrahl 2 mit Hilfe des Schwenkspiegels 6 synchron zu der Bewegung der Doppelfilterzigaretten 16 mit der Fördergeschwindigkeit 52 nachgeführt werden, um auch hier eine vollumfangsseitige Perforierung der Doppelfilterzigaretten 16 zu erreichen.

Die Fig. 10 zeigt einen Schnitt entlang der Linie E-E durch die Ausführungsform der Fig. 9. Die Fig. 10 zeigt beidseitig von dem Bandförderer 46 die jeweiligen Gegenrollbänder 24, 24' bzw. Rollbänder 50, 50'. Auch bei dieser Ausführungsform sind zwei Laserstrahlen 2, 2' vorgesehen, um an den Enden des Filterabschnittes 32 jeweils die Perforationsspuren einzubringen.

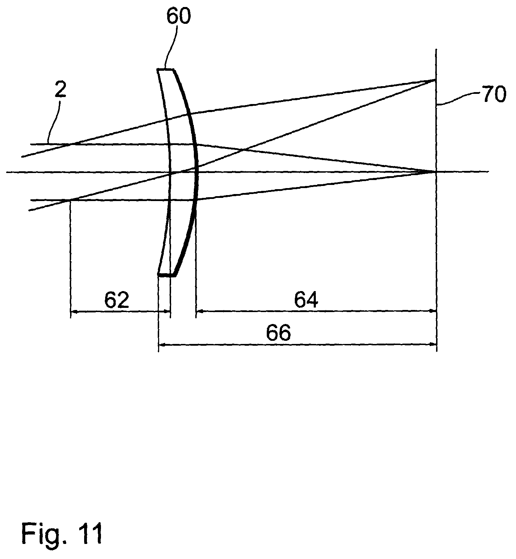

Die Fig. 11 zeigt eine schematische Darstellung einer für die erfindungsgemäße Perforationsvorrichtung 1 verwendbaren sphärischen Meniskus F-Theta-Planfeldlinse 60. Die Fig. 11 zeigt die Linse 60 in einer Seitenansicht. Die Linse 60 weist eine Eintrittspupille 62, einen Arbeitsabstand 64 und eine Brennweite 66 auf. Mit 70 ist die Arbeitsoberfläche bezeichnet, die bei den Perforationsvorrichtungen 1 gemäß den vorhergehenden Fig. die Oberfläche der zu perforierenden Doppelfilterzigarette 16 ist. Wie aus der Fig. 11 zu erkennen ist, bleibt der Laserstrahl 2 fokussiert, auch wenn er aus verschiedenen Richtungen auf die sphärische F-Theta-Planfeldlinse 60 fällt. Das Gleiche gilt (nicht dargestellt) für eine parallele Versetzung des Laserstrahls 2.

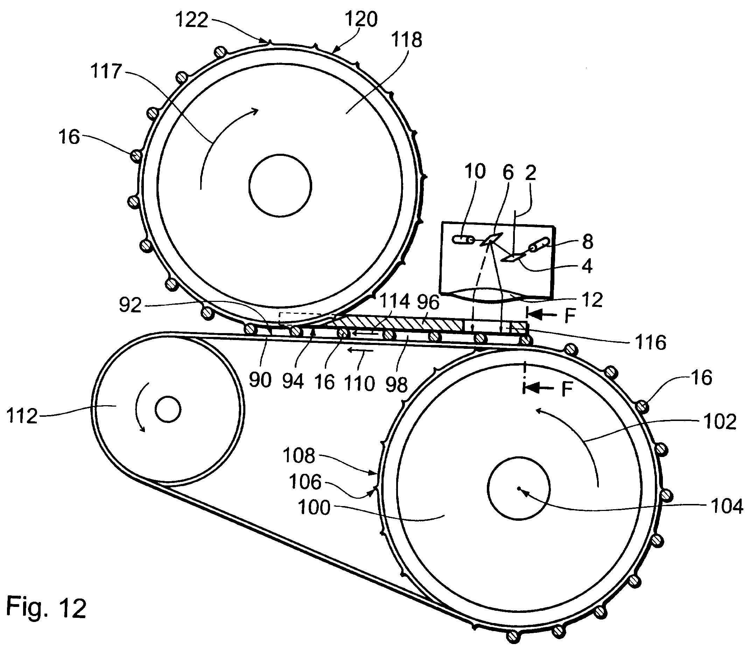

Die Fig. 12 zeigt eine sechste Ausführungsform der erfindungsgemäßen Perforationsvorrichtung. In der Fig. 12 sind Teile, die im wesentlichen mit Teilen vorheriger Fig. übereinstimmen, mit den gleichen Bezugszeichen bezeichnet worden. Die Ausführungsform der Fig. 12 unterscheidet sich von den zuvor beschriebenen Ausführungsformen dadurch, daß die Funktionen von Transportmittel zum Transportieren der Doppelfilterzigaretten 16 durch die Wirkzone, und eines Zufördermittels getrennt sind. In der Ausführungsform der Fig. 12 dient als Transportmittel ein Rollband 90. Das Rollband 90 bildet mit seiner Oberfläche eine Rollfläche 92 für die zu rollenden Doppelfilterzigaretten 16. Die Rollfläche 92 wirkt zusammen mit einer Gegenrollfläche 94. Die Gegenrollfläche 94 wird von der Unterseite eines parallel zum Rollband 90 angeordneten Rollklotzes 96 gebildet. Die Rollfläche 92 und die Gegenrollfläche 94 bilden zusammen einen Rollkanal 98.

Dem Rollkanal 98 werden die Doppelfilterzigaretten 16 durch eine Zufördertrommel 100 zugeführt. Die gemäß Pfeil 102 um die Achse 104 rotierende Zufördertrommel trägt die Doppelfilterzigaretten 16 queraxial zur Förderrichtung 114 in Mulden 106, die auf der Umfangsoberfläche 108 der Fördertrommel 100 vorgesehen sind.

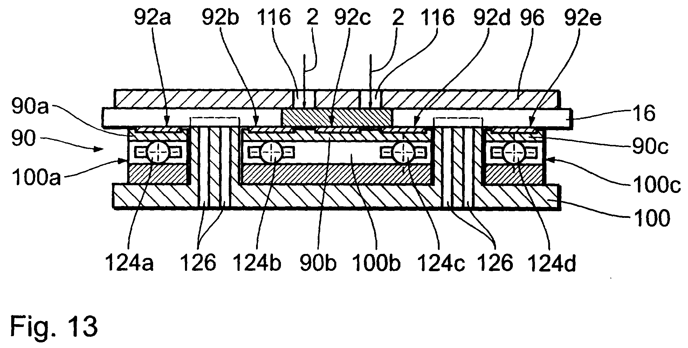

Die Doppelfilterzigaretten 16 werden in die Mulden 106 von (in Fig. 13 dargestellten) Saugkanälen 126 angesaugt. An der in der Fig. 12 durch die Schnittlinie F-F gekennzeichneten Stelle gelangt die Rollfläche 92 des Rollbandes 90 in Kontakt mit den sich in den Ausnehmungen 106 befindenden Doppelfilterzigaretten 16. Gleichzeitig gelangen die Doppelfilterzigaretten 16 mit der Gegenrollfläche 94 des Rollklotzes 96 in Kontakt. Diese Stelle markiert daher den Beginn des Rollkanals 98 und den Beginn der Rollbewegung der Doppelfilterzigaretten 16 in dem Rollkanal 98. Die Fördergeschwindigkeit der Doppelfilterzigaretten 16 in dem Rollkanal 98 wird durch die durch den Pfeil 110 symbolisierte Geschwindigkeit des Rollbandes 90 bestimmt. Diese Geschwindigkeit ist in der Fig. 12 so gewählt, daß die Teilung der Doppelfilterzigaretten 16 in dem Rollkanal der Teilung der Doppelfilterzigaretten 16 auf der Umfangsoberfläche 108 der Zufördertrommel 100 entspricht. Da gemäß Fig. 12 das Rollband 90 mit seiner Rollfläche 92 - wenn es sich um die Zufördertrommel 100 windet - mit der Umfangsoberfläche 108 der Zufördertrommel 100 fluchtet und gleichzeitig koaxial zu der Zufördertrommel 100 um die Achse 104 umläuft, weist das Rollband 90 die doppelte Umfangsgeschwindigkeit verglichen mit der Umfangsgeschwindigkeit der Rolltrommel 100 auf. Nach dem Rollkanal 98 läuft das Rollband 90 um eine Umlenktrommel 112 um, von der es zurück zu der Zufördertrommel 100 geführt wird.

An dem in Förderrichtung der Doppelfilterzigaretten 16 gesehenen Anfang des Rollkanals 98 sind in dem Rollklotz 96 parallel zur Förderrichtung 114 verlaufende Ausnehmungen 116 in dem Rollklotz 96 vorgesehen. Durch diese Ausnehmungen 116 kann der Laserstrahl 2 auf die Doppelfilterzigaretten 16 einwirken und diese während sie sich in der durch die Ausnehmungen 116 definierten Wirkzone bewegen, perforieren. Zu diesem Zwecke wird - wie bezüglich der vorstehend beschriebenen Ausführungsbeispiele ausführlich erläutert wurde - der Laserstrahl 2 mit Hilfe von dem Schwenkspiegel 6 der Förderbewegung 114 der Doppelfilterzigaretten 16 in dem Rollkanal 98 innerhalb der durch die Ausnehmungen 116 definierten Wirkzonen nachgeführt.

Anschließend laufen die derart perforierten Doppelfilterzigaretten 16 an das Ende des Rollkanals 98 und werden dort von einer gemäß Pfeil 117 rotierenden Abfördertrommel 118 erfaßt. Zu diesem Zweck weist auch die Abfördertrommel 118 auf ihrer Umfangsoberfläche 120 Mulden 122 zur Aufnahme der perforierten Doppelfilterzigaretten 16 auf.

Die Fig. 13 zeigt einen Schnitt durch die Ausführungsform der Fig. 12 entlang der Linien F-F. Die Fig. 13 zeigt deutlich die sich am Anfang des Rollkanals 98 befindende Doppelfilterzigarette 16. Teile, die mit denen der Fig. 12 übereinstimmen, sind in der Fig. 13 mit gleichen Bezugszeichen bezeichnet.

Die Doppelfilterzigarette 16 befindet sich zwischen dem Rollklotz 96 und dem Rollband 90. Die Fig. 13 zeigt, daß das Rollband 90 aus drei Teilen 90a, 90b und 90c besteht. Die der Doppelfilterzigarette 16 zugewandte Rollfläche 92 des Rollbandes 90 ist auf dem mittleren Teil 90b des Rollbandes 90 nochmals unterteilt, so daß insgesamt fünf Oberflächenteile 92a, 92b, 92c, 92d und 92e vorhanden sind.

Die Teile 90a, 90b und 90c des Rollbandes 90 sind jeweils getrennt voneinander auf Lagern 124a bzw. 124b und 124c bzw. 124d in Ausnehmungen 100a, 100b und 100c in der Zufördertrommel 100 gelagert.

Die Fig. 13 zeigt weiterhin die oben in Zusammenhang mit der Fig. 12 erläuterten, sich radial in die Mulden 106 innerhalb der Fördertrommel erstreckenden Saugkanäle 126.

Weiterhin zeigt die Fig. 13 die in Zusammenhang mit Fig. 12 erläuterten Ausnehmungen 116 in dem Rollklotz 96 für den Laserstrahl 2.

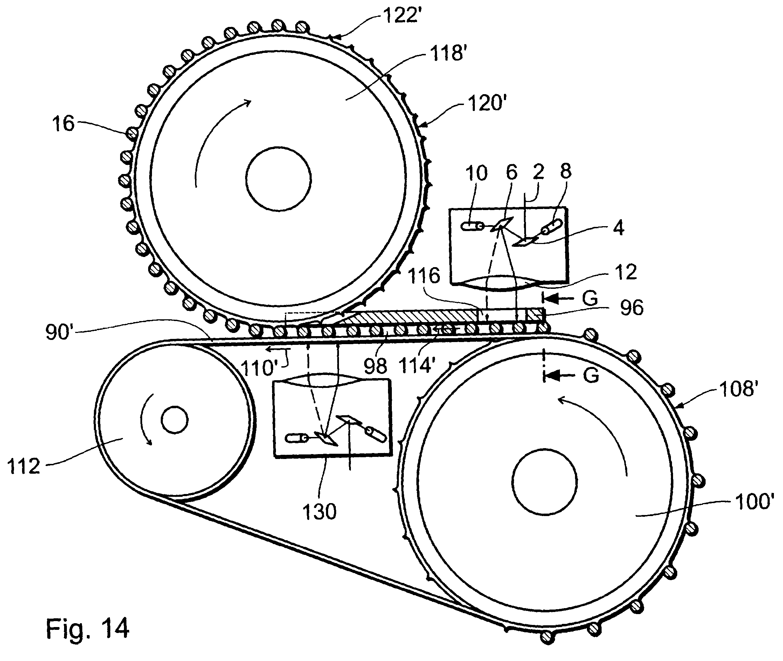

Die Fig. 14 zeigt eine siebte Ausführungsform der erfindungsgemäßen Perforationsvorrichtung 1. Teile, die mit denen der Ausführungsform gemäß Fig. 12 übereinstimmen, sind mit gleichen Bezugszeichen bezeichnet. Im Gegensatz zur Ausführungsform gemäß Fig. 12 zeigt diese siebte Ausführungsform ein Rollband 92', welches mit derselben Umfangsgeschwindigkeit umläuft, wie eine Zufördertrommel 100'. Dies bewirkt, daß die Teilung der Doppelfilterzigaretten 16 auf der Umfangsoberfläche 108' der Zufördertrommel 100' doppelt so groß ist, wie die Teilung der Doppelfilterzigaretten 16 in dem Rollkanal 98. Die Teilung der Doppelfilterzigarerten 16 in dem Rollkanal 98 ist somit kleiner als der Umfang der Doppelfilterzigaretten 16. Somit kann in der durch die ersten Ausnehmungen 16 gebildeten Wirkzonen nur jede zweite Doppelfilterzigarette 16 von dem Laserstrahl 2 perforiert werden. Die verbleibenden Doppelfilterzigaretten 16 werden am Ende des Rollkanals durch eine zweite Laserstrahlanordnung mit identischem Aufbau wie die bisher beschriebenen Laserstrahlanordnungen perforiert. Auf diese Weise ist sichergestellt, daß jede Doppelfilterzigarette den Rollkanal 98 perforiert verläßt. Nach Verlassen des Rollkanals 98 werden die Doppelfilterzigaretten 16 von einer Abfördertrommel 118' gefördert, welche Abfördertrommel 118' gegenüber der in Fig. 12 beschriebenen Abfördertrommel 118 die doppelte Anzahl von Mulden 122' zur Aufnahme von Doppelfilterzigaretten 16 auf ihrer Umfangsoberfläche 120' aufweist. Somit weist die Abfördertrommel 118' auch die doppelte Anzahl von Mulden 122', also die doppelte Teilung gegenüber der Zufördertrommel 100' auf.

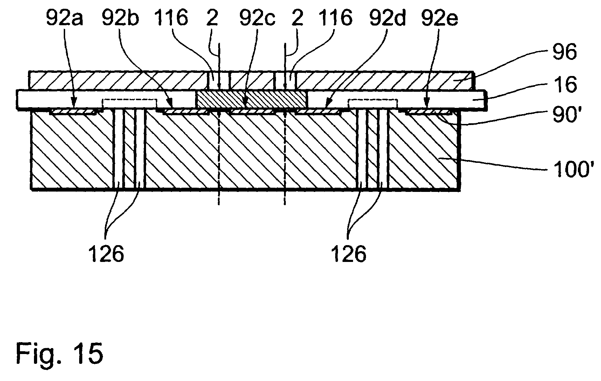

Die Fig. 15 ist ein Schnitt entlang der Linie G-G in der Fig. 14. Im Unterschied zu dem Schnitt gemäß Fig. 13 wird deutlich, daß das Rollband 90' selbst die Umfangsoberfläche 108' der Zufördertrommel 100' bildet. Auch hier ist das Rollband 90' unterteilt, so daß sich auch hier die bereits in Fig. 13 genau beschriebenen Oberflächen 92a bis 92e des Rollbandes 90' ergeben. Es ist somit klar, daß das Rollband 90' mit der gleichen Umfangsgeschwindigkeit abläuft, wie die Zufördertrommel 100'.

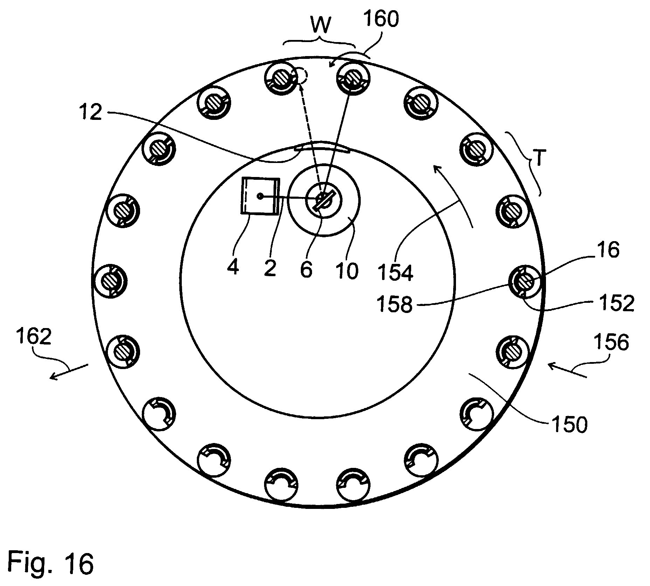

Die Fig. 16 zeigt eine schematische Seitenansicht einer weiteren Ausführungsform der erfindungsgemäßen Perforationsvorrichtung. Die Teile, die mit Teilen vorhergehender Ausführungsformen übereinstimmen, sind mit gleichen Bezugszeichen bezeichnet. Die Fig. zeigt eine als erfindungsgemäßes Transportmittel dienende Transporttrommel 150 in einer Seitenansicht. Die Transporttrommel 150 trägt umfangseitig als erfindungsgemäße Aufnahmen dienende Mulden 152. Die Mulden 152 sind queraxial zur Förderrichtung 154 der Transporttrommel 150 mit einer Teilung T auf der Transporttrommel 150 angeordnet.

An der mit dem Pfeil 156 bezeichneten Stelle werden der Transporttrommel 150 die zu perforierenden Doppelfilterzigaretten 16 über nicht dargestellte Zufördertrommel zugeführt. Sobald die Doppelfilterzigaretten 16 in den Mulden 152 zu liegen kommen, werden sie über in der Fig. 16 schematisch dargestellte Saugkanäle 158 mit Saugluft beaufschlagt und somit in den Mulden 152 festgehalten.

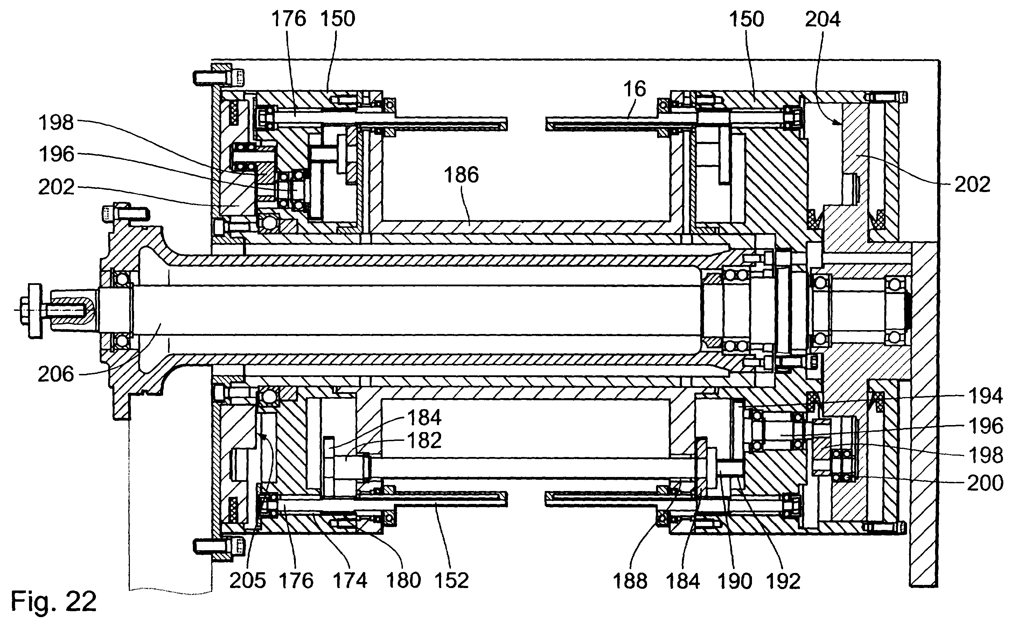

Während die Transporttrommel 150 in der Förderrichtung 154 rotiert, verbleiben die Mulden 152 zusammen mit den Doppelfilterzigaretten 16 zunächst in der in der Fig. 16 dargestellten Ruhelage. Sobald die Mulden 152 jedoch in den Bereich der Wirkzone W des Laserstrahls 2 gelangen, werden die Mulden 152 über weiter unten mit Bezug auf die Fig. 22 beschriebene Rotationsmittel in Rotation versetzt, so daß die Doppelfilterzigaretten 16 während des Aufenthaltes in der Wirkzone W eine Drehung um 360 Grad ausführen. Diese Eigenrotationsbewegung der Doppelfilterzigaretten 16 in der Wirkzone W ist durch den Pfeil 160 symbolisiert. Während sich die Doppelfilterzigaretten 16 durch die Wirkzone W bewegen, wird der Laserstrahl 2 mit Hilfe des Schwenkspiegels 6, welcher durch den Antrieb 10 angetrieben wird, der Doppelfilterzigarette 16 in der rotierenden Mulde 152 nachgeführt.

Nach Verlassen der Wirkzone W befindet sich die Mulde 152 wieder in der Ruhelage, in der sie auch vor dem Eintritt in die Wirkzone W war. Die nun perforierte Doppelfilterzigarette 16 wird anschließend an der mit dem Pfeil 162 markierten Stelle an eine nicht dargestellte Abfördertrommel weitergegeben.

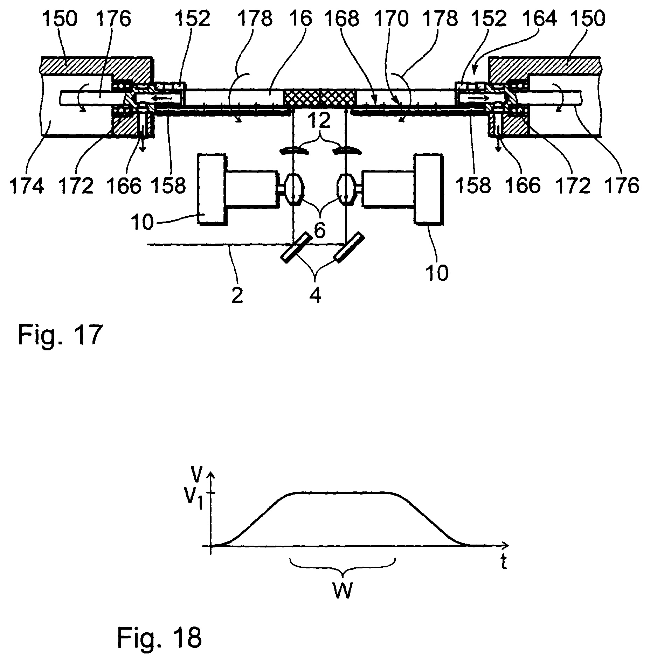

Fig. 17 zeigt eine schematische Prinzipskizze der Perforationsvorrichtung gemäß Fig. 16. Insbesondere zeigt die Fig. 17, daß die Transporttrommel 150 auf ihrem Umfang eine Ausnehmung 164 trägt. In dieser Ausnehmung 164 befinden sich spiegelbildlich gegenüberliegend die queraxial zur Förderrichtung angeordneten Mulden 152. In den Mulden 152 befindet sich eine zu perforierende Doppelfilterzigarette 16.

Die Mulden 152 weisen jeweils Saugkanäle 158 auf. Die Saugkanäle 158 sind mit einem Saugluftkanalsystem 166 in der Transporttrommel 150 verbunden. Um die Doppelfilterzigaretten 16 an die Oberfläche 168 der Mulden 152 anzusaugen, sind in der Oberfläche 168 der Mulden 152 kleine Bohrungen 170 vorgesehen, die die Oberfläche 168 jeweils mit den Saugkanälen 158 verbinden.

Die Mulden 152 sind jeweils in Lagern 172 in der Transporttrommel 150 drehbar gelagert. Die Mulden 152 sind durch die Lager 172 hindurch in das Innere 174 der Transporttrommel 150 hinein mit einer Verlängerung 176 versehen. Diese Verlängerung 176 wird von den unten mit Bezug auf die Fig. 22 erläuterten Rotationsmitteln angetrieben. Auf diese Weise läßt sich die durch die Pfeile 178 symbolisierte Eigenrotationsbewegung der Doppelfilterzigaretten 16 in den rotierenden Mulden 152 erzeugen.

Die Fig. 18 zeigt einen Graph des zeitlichen Verlaufes der Rotationsgeschwindigkeit der Mulden 152 gemäß Fig. 17. Die Fig. zeigt, daß die Rotationsgeschwindigkeit V während des Aufenthaltes der Doppelfilterzigaretten 16 in der Wirkzone W konstant ist. Vor dem Erreichen der Wirkzone W wird die Rotationsgeschwindigkeit V aus der Ruhelage im wesentlichen linear auf die gewollte Endgeschwindigkeit V 1 hochgefahren. Nach Verlassen der Wirkzone W wird die Rotationsgeschwindigkeit dann von der Geschwindigkeit V 1 wieder herunter auf 0 gefahren, so daß sich die Mulden 152 wieder in ihrer Ruhelage im Stillstand befinden.

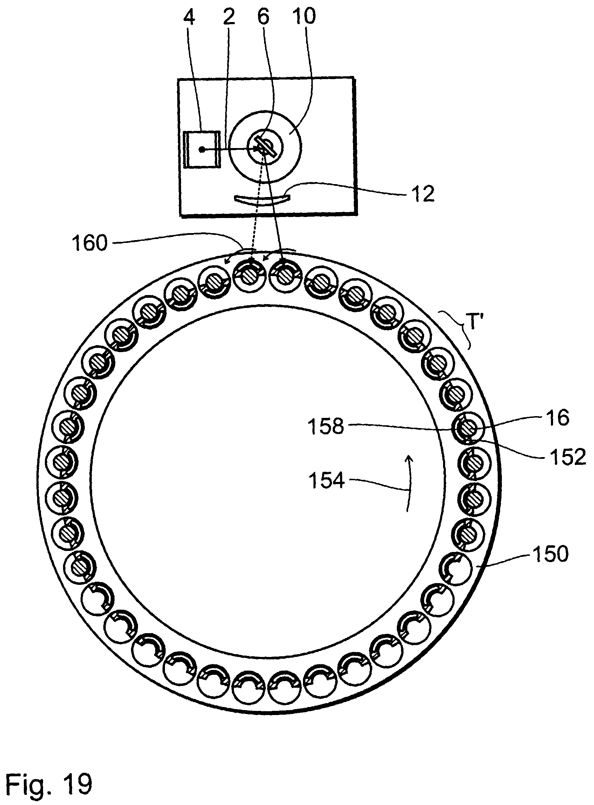

Fig. 19 zeigt eine schematische Ansicht einer weiteren Ausführungsform einer Perforationsvorrichtung. Die Ausführungsform der Fig. 19 stimmt im wesentlichen mit der Fig. 16 überein. Die Ausführungsform der Fig. 19 weist jedoch im Gegensatz zu der Fig. 16 eine kleinere Teilung T auf. Darüber hinaus wirkt der Laserstrahl 2 bei der Ausführungsform gemäß Fig. 19 nicht aus dem Inneren der Transporttrommel 150 auf die Doppelfilterzigaretten 16 ein, sondern ist außerhalb der Transporttrommel 150 angeordnet.

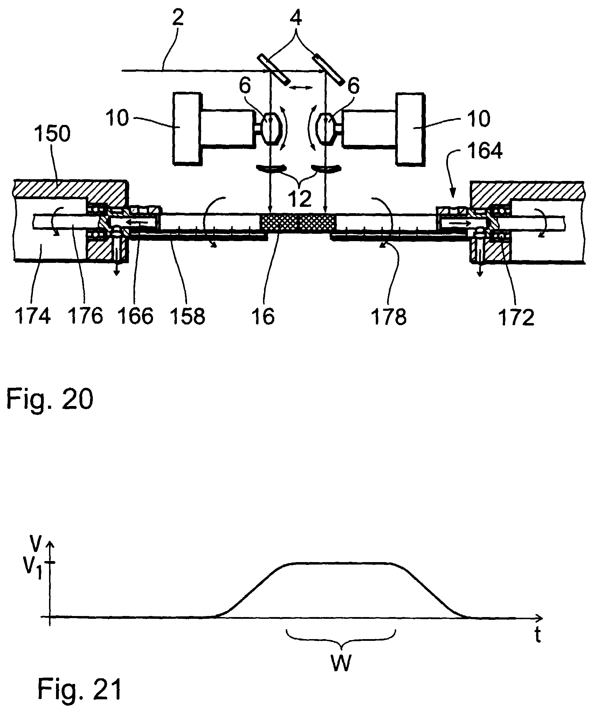

Die Fig. 20 und 21 entsprechen sinngemäß den Fig. 17 und 18, so daß hier auf eine erneute Erläuterung verzichtet werden kann.

Die Fig. 22 zeigt einen Schnitt durch die in der Fig. 19 dargestellte Transporttrommel 150. Es sind jeweils zwei Paare sich gegenüberliegender Mulden 152 zu erkennen. In der Fig. 22 sind die Mulden 152 jedoch ohne sich darin befindende Doppelfilterzigaretten 16 dargestellt. Die Verlängerungen 176 der Mulden 152 in das Innere 174 der Transporttrommel 150 tragen jeweils Ritzel 180. Diese Ritzel 180 kämmen jeweils mit auf einer Antriebswelle 182 angeordneten Zahnrädern 184. Die in einem Flansch 186 in der Transporttrommel 150 in einer Nadelhülse 188 gelagerte Antriebswelle 182 trägt an ihrem Ende 190 ebenfalls ein Ritzel 192. Dieses Ritzel 192 kämmt mit einem zweiten Zahnrad 194. Das zweite Zahnrad 194 sitzt auf einer Welle 196. Diese Welle 196 ist verdrehfest mit einem Hebel 198 verbunden. Der Hebel 198 läuft mit Rollen 200 in einer U-förmigen Steuerkurve 202, die sich in der Stirnwandinnenseite 204 der Transporttrommel 150 befindet.

Wird die Transporttrommel 150 mit Hilfe der Antriebswelle 206 in Rotation gebracht, so wird der Hebel 198 bzw. werden die Rollen 200 des Hebels 198 in der ortsfesten Steuerkurve 202 zwangsgeführt. Auf diese Weise kommt es zu einer Schwenkbewegung des Hebels 198 um die Rotationsachse der Welle 196. Über das zweite Zahnrad 194, das Ritzel 192, die Antriebswelle 190, das erste Zahnrad 184 und schließlich das Ritzel 180 wird diese Schwenkbewegung des Hebels 198 dann in eine Rotationsbewegung der Mulde 152 übersetzt. Entlang des Umfangs der Transportrommel 150 benachbarte Mulden 152 werden mit Hilfe von in jeweils gegenüberliegenden Stirnwandinnenseiten 204, 205 laufenden Hebeln 198 gesteuert. Die Fig. 22 stellt daher die in der Fig. oben dargestellten Mulden 152 als durch die in der Fig. links dargestellte Steuerkurve 202 in der links dargestellten Stirnwandinnenseite 205 gesteuert dar, während die unten dargestellten Mulden 152 von der rechts dargestellten Steuerkurve 202 in der rechts dargestellten Stirnwandinnenseite 204 gesteuert werden.

Durch entsprechende Konstruktion der Steuerkurve 202 läßt sich durch die zuvor beschriebene Übersetzung der Schwenkbewegung des Hebels 198 eine Eigenrotationsbewegung der Mulden 152 gemäß Fig. 18 realisieren.

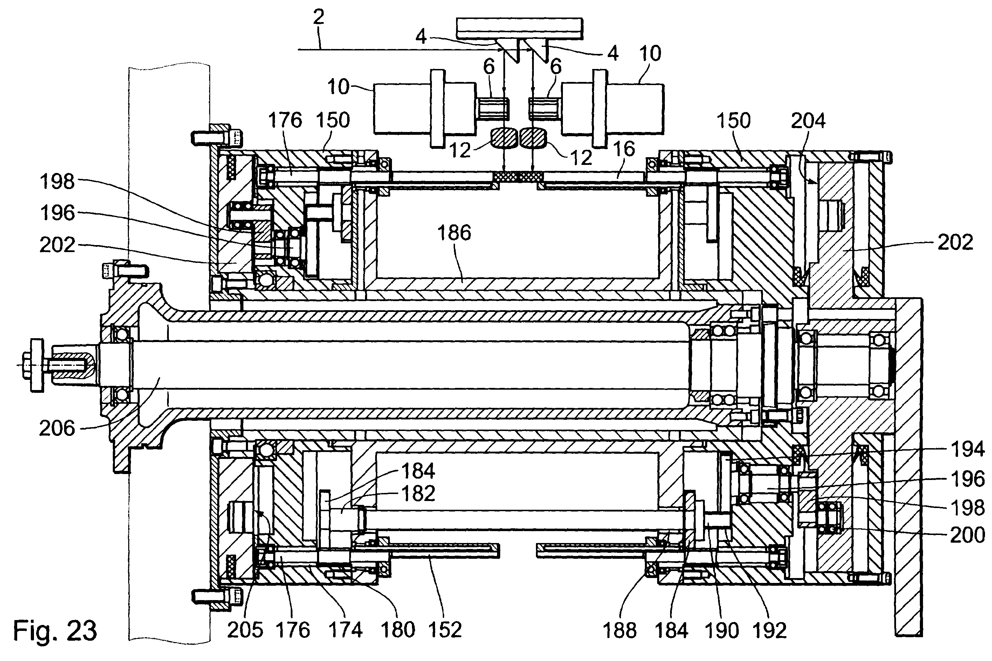

Fig. 23 zeigt den Schnitt der Fig. 22 einschließlich der in der Fig. 19 oben dargestellten Lasernachführ- und Fokussiereinrichtungen. In der Fig. 23 sind Teile, die mit Teilen vorhergehender Fig. übereinstimmen mit gleichen Bezugszeichen bezeichnet. Die Fig. 23 zeigt zusätzlich zu dem in Fig. 22 dargestellten Schnitt eine in den oben dargestellten Mulden 152 liegende Doppelfilterzigarette 16. In der Fig. 23 ist oberhalb der Doppelfilterzigarette 16 schematisch der Laserstrahl 2 nebst den Schwenkspiegeln 4 und 6 und den Linsen dargestellt. Im übrigen weicht die Fig. 23 nur zeichentechnisch von der Ausführungsform gemäß Fig. 22 ab.

## Patentansprüche

1. Perforationsvorrichtung zum Herstellen von Öffnungen in einer Umfangsoberfläche eines im wesentlichen länglichen, zylinderförmigen Gegenstandes (16), insbesondere einer Zigarette,
mit mindestens einer Lichtquelle zum Erzeugen mindestens eines energiereichen Lichtstrahles (2), mit dessen Hilfe die Öffnungen in den Gegenstand (16) einbringbar sind,
mit mindestens einerdurch ein Nachführmittel (6)zum Nachführen des Lichtstrahles (2) erzeugbaren Wirkzone, innerhalb derer der Lichtstrahl (2) zum Einbringen der Öffnungen auf einen sich durch die Wirkzone bewegenden Gegenstand (16) einwirkt,
mit Rollmitteln (24, 28, 40, 42, 50) zum Erzeugen einer Eigenrotationsbewegung der Gegenstände (16) um ihre Längsachse während die Gegenstände (16) sich durch die Wirkzone bewegen, um die Umfangsoberfläche dem Lichtstrahl (2) auszusetzen,
mit Transportmitteln (20, 46) zum Befördern des Gegenstandes (16) durch die Wirkzone,
gekennzeichnet durch ein Lichtbrechungsmittel (12), durch welches der Lichtstrahl (2) vor dem Erreichen der Wirkzone hindurchgeführt wird, so daß dieser beim Nachführen des Lichtstrahles (6) im wesentlichen überall innerhalb der Wirkzone fokussiert bleibt.

2. Perforationsvorrichtung nach Anspruch 1,
dadurch gekennzeichnet, daß das Lichtbrechungsmittel (12) ortsfest ist.

3. Perforationsvorrichtung nach einem der vorstehenden Ansprüche,
dadurch gekennzeichnet, daß das Lichtbrechungsmittel (12) eine Fokus-korrigierte Linse (F-Theta-Linse) ist.

4. Perforationsvorrichtung nach einem der vorstehenden Ansprüche,
wobei die Transportmittel (20, 46) die Gegenstände (16) auf einem Transportweg durch die Wirkzone befördern, welcher im wesentlichen senkrecht zu den Lichtstrahlen (2), die aus dem Lichtbrechungsmittel (12) austreten, verläuft.

5. Perforationsvorrichtung nach einem der vorstehenden Ansprüche,
wobei die Transportmittel (20, 46) die Gegenstände (16) während des Durchlaufens der Wirkzone auf einem Transportweg befördern, welcher im wesentlichen parallel zu der Hauptebene der Lichtbrechungsmittel (12) verläuft.

6. Perforationsvorrichtung nach einem der vorstehenden Ansprüche,
dadurch gekennzeichnet, daß die Transportmittel (20, 46) einen Querförderer aufweisen, auf welchem die Gegenstände (16) queraxial gefördert werden.

7. Perforationsvorrichtung nach Anspruch 6,
dadurch gekennzeichnet, daß der Querförderer (20, 46) Ausnehmungen (48) zur Aufnahme der Gegenstände (16) aufweist, wobei die Gegenstände (16) in den Ausnehmungen (48) liegen, während sie von den Rollmitteln in die Eigenrotationsbewegung versetzt werden.

8. Perforationsvorrichtung nach Anspruch 6 oder 7,
dadurch gekennzeichnet, daß der Querförderer (20, 46) als Bandförderer (46) ausgebildet ist.

9. Perforationsvorrichtung nach einem der Ansprüche 6 bis 8,
dadurch gekennzeichnet, daß der Querförderer (20, 46) als Rolltrommel (20) ausgebildet ist.

10. Perforationsvorrichtung nach einem der vorstehenden Ansprüche,
dadurch gekennzeichnet, daß die Rollmittel (24, 28, 40, 42, 50) eine zumindest in der Wirkzone dem Transportmittel (20, 46) gegenüberliegende Gegenrollfläche (23, 44) aufweisen, so daß die in eine Eigenrotationsbewegung zu versetzenden Gegenstände (16) zwischen dem Transportmittel und der Gegenrollfläche quer zur Förderrichtung (52) des Transportmittels (20, 46) in der Wirkzone in Eigenrotation versetzt werden.

11. Perforationsvorrichtung nach Anspruch 10,
dadurch gekennzeichnet, daß die Gegenrollfläche (23) als Gegenrollband (24) ausgebildet ist.

12. Perforationsvorrichtung nach Anspruch 10,
dadurch gekennzeichnet, daß die Gegenrollfläche (44) als Gegenrolltrommel (42) ausgebildet ist.

13. Perforationsvorrichtung nach den Ansprüchen 6, 10 und nach einem der vorstehenden Ansprüche,
dadurch gekennzeichnet, daß die Gegenrollfläche (23) und der Querförderer (20, 46) zumindest in der Wirkzone gleichgerichtete Förderkomponenten aufweisen.

14. Perforationsvorrichtung nach Anspruch 13,
dadurch gekennzeichnet, daß die Geschwindigkeiten der Gegenrollfläche (23) und des Querförderers (20, 46) zumindest in der Wirkzone derart sind, daß sich der Gegenstand (16) in der Wirkzone während seiner Eigenrotationsbewegung weiterhin in die ursprüngliche Förderrichtung (52) bewegt.

15. Perforationsvorrichtung nach Anspruch 14,
dadurch gekennzeichnet, daß der Gegenstand (16) sich während der Eigenrotationsbewegung weiterhin mit der ursprünglichen Fördergeschwindigkeit weiterbewegt.

16. Perforationsvorrichtung nach Anspruch 14,
dadurch gekennzeichnet, daß der Gegenstand (16) sich während der Eigenrotationsbewegung mit gegenüber der ursprünglichen Fördergeschwindigkeit erhöhter Geschwindigkeit bewegt.

17. Perforationsvorrichtung nach Anspruch 14,
dadurch gekennzeichnet, daß der Gegenstand (16) sich während der Eigenrotationsbewegung mit gegenüber der ursprünglichen Fördergeschwindigkeit verminderter Geschwindigkeit bewegt.

18. Perforationsvorrichtung nach einem der vorstehenden Ansprüche,
dadurch gekennzeichnet, daß sich der Gegenstand (16) während des Aufenthalts in der Wirkzone einmal um die eigene Achse dreht.

19. Perforationsvorrichtung nach Anspruch 10 und nach einem der vorstehenden Ansprüche,
dadurch gekennzeichnet, daß die Rollmittel (24, 28, 40, 42, 50) weiterhin eine der Gegenrollfläche (23) gegenüberliegende, transportmittelseitige Rollfläche (26) derart aufweisen, daß die Gegenstände (16) im Bereich der Wirkzone zwischen der Gegenrollfläche (23) und der Rollfläche (26) gerollt werden.

20. Perforationsvorrichtung nach Anspruch 19,
dadurch gekennzeichnet, daß die Rollfläche (26) als Rollband (50) ausgebildet ist.

21. Perforationsvorrichtung nach Anspruch 20,
dadurch gekennzeichnet, daß das Rollband (50) und das Transportmittel (20, 46) zumindest in der Wirkzone gleichgerichtete Förderkomponenten aufweisen.

22. Perforationsvorrichtung nach Anspruch 20,
dadurch gekennzeichnet, daß das Rollband (50) und das Transportmittel (20, 46) zumindest in der Wirkzone entgegengesetzte Förderkomponenten aufweisen, während das Gegenrollband (24)/die Gegenrolltrommel (42) die gleiche Förderrichtung wie das Transportmittel (20, 46) aufweisen.

23. Perforationsvorrichtung nach einem der Ansprüche 20 bis 22,
dadurch gekennzeichnet, daß das Rollband zumindest innerhalb der Wirkzone gleichzeitig als Transportmittel für die Gegenstände (16) dient.

24. Perforationsvorrichtung nach Anspruch 10 und nach einem der vorstehenden Ansprüche,
dadurch gekennzeichnet, daß die Gegenrollfläche als Gegenrollklotz ausgebildet ist.

25. Perforationsvorrichtung nach Anspruch 23,
dadurch gekennzeichnet, daß der Gegenrollklotz Ausnehmungen aufweist, durch die hindurch der Lichtstrahl (2) die Gegenstände (16) perforieren kann.

26. Perforationsvorrichtung nach Anspruch 23 und nach einem der Ansprüche 24 oder 25,
dadurch gekennzeichnet, daß das Rollband und der Gegenrollklotz einen Rollkanal für die Gegenstände (16) bilden,
wobei Zu- und Abfördermittel vorgesehen sind, die die Gegenstände (16) dem Rollkanal zufördern, bzw. die gerollten Gegenstände (16) aus dem Rollkanal abfördern.

27. Perforationsvorrichtung nach Anspruch 26,
dadurch gekennzeichnet, daß die Teilung der Gegenstände (16) in dem Rollkanal größer ist als deren Umfang,
wobei die Gegenstände (16) von dem Lichtstrahl (2) sukzessive perforierbar sind.

28. Perforationsvorrichtung nach Anspruch 26,
dadurch gekennzeichnet, daß die Teilung der Gegenstände (16) im Rollkanal kleiner ist als deren Umfang, wobei entlang des Rollkanals mindestens n (n eine natürliche Zahl größer gleich 2) Wirkzonen vorgesehen sind derart, daß durch Zusammenwirken aller Wirkzonen alle den Rollkanal durchlaufenden Gegenstände (16) perforierbar sind.

29. Perforationsvorrichtung nach Anspruch 28,
dadurch gekennzeichnet, daß die Teilung der Gegenstände (16) im Rollkanal halb so groß ist wie deren Umfang,
wobei zwei Wirkzonen vorgesehen sind, mit deren Hilfe versetzt nacheinander in jeder Wirkzone jeweils jeder zweite Gegenstand (16), der die jeweilige Wirkzone passiert, perforierbar ist.

30. Perforationsvorrichtung nach Anspruch 29,
dadurch gekennzeichnet, daß das Rollband mit derselben Fördergeschwindigkeit wie das Zufördermittel läuft.

31. Perforationsvorrichtung nach einem der vorstehenden Ansprüche,
dadurch gekennzeichnet, daß die Nachführmittel (6) ein Schwenkspiegel oder ein rotierender Prismenspiegel im Strahlengang des Lichtstrahles (2) sind.

32. Perforationsvorrichtung nach einem der vorstehenden Ansprüche,
dadurch gekennzeichnet, daß die Lichtquelle ein Laser ist.

33. Perforationsvorrichtung nach einem der vorstehenden Ansprüche,
dadurch gekennzeichnet, daß das Rollmittel (152) ein Teil des Transportmittels (150) ist.

34. Perforationsvorrichtung nach Anspruch 33,
bei der das Transportmittel ein Querförderer (150) ist, auf welchem die Gegenstände (16) queraxial gefördert werden, wobei der Querförderer (150) Aufnahmen (152) zur Aufnahme der Gegenstände (16) aufweist,
dadurch gekennzeichnet, daß die Aufnahmen (152) zum Erzeugen der Eigenrotationsbewegung der Gegenstände (16) um ihre Längsachse rotierbar sind.

35. Perforationsvorrichtung nach Anspruch 34,
dadurch gekennzeichnet, daß die Aufnahmen Mulden (152) sind, die mit Saugluft beaufschlagbar sind, um die Gegenstände (16) darin zu halten.

36. Perforationsvorrichtung nach einem der Ansprüche 34 bis 35,
dadurch gekennzeichnet, daß die Aufnahmen (152) an einer Transporttrommel (150) drehbar gelagert sind.

37. Perforationsvorrichtung nach Anspruch 36,
wobei die Tansporttrommel (150) eine bestimmte Teilung (T) aufweist,
dadurch gekennzeichnet, daß die Aufnahmen (152) mit Hilfe von Rotationsmitteln (176, 180, 182, 184, 192, 194, 196, 198, 200, 202, 206) derart rotierbar sind,
daß die Gegenstände (16) innerhalb einer Rotation der Transporttrommel (150) um eine Teilung (T) um etwa 360 Grad rotierbar sind.

38. Perforationsvorrichtung nach Anspruch 36 und nach einem der vorstehenden Anspüche,
dadurch gekennzeichnet, daß die Lichtquelle, die Nachführmittel (4, 6, 8, 10) und/oder die Lichtbrechungsmittel (12) innerhalb der Transporttrommel (150) angeordnet sind.

39. Perforationsvorrichtung nach Ansprüch 36 und nach einem der vorstehenden Ansprüche,
dadurch gekennzeichnet, daß entlang des Umfangs der Transporttrommel (150) zwei sich spiegelbildlich gegenüberliegende Reihen von Aufnahmen (152) mit einem bestimmten Teilungsabstand (T) angeordnet sind.

40. Perforationsvorrichtung nach Anspruch 39,
bei der jeweils zwei spiegelbildlich gegenüberliegende Aufnahmen mit Hilfe von Rotationsmitteln (176, 180, 182, 184, 192, 194, 196, 198, 200, 202, 206) rotierbar sind,
dadurch gekennzeichnet, daß die Rotationsmittel (176, 180, 182, 184, 192, 194, 196, 198, 200, 202, 206) jeweils an den Aufnahmen (152) befestigte Ritzel (180) umfassen, welche Ritzel (180) jeweils mit einem auf einer gemeinsamen Antriebswelle (182) angeordneten Zahnrad (184) kämmen.

41. Perforationsvorrichtung nach Anspruch 40,
dadurch gekennzeichnet, daß die Antriebswelle (182) von einem an einer der Stirninnenseiten (204) der Transporttrommel (150) angeordneten Steuermittel (198, 202), welches über ein Zahnrad (194) ein Ritzel (192) der Antriebswelle (182) treibt, antreibbar ist.

42. Perforationsvorrichtung nach Anspruch 41,
dadurch gekennzeichnet, daß das Steuermittel ein Hebel (198) umfaßt, der in einer ortsfesten Steuerkurve (202) geführt wird.

43. Perforationsvorrichtung nach Anspruch 42,
dadurch gekennzeichnet, daß die Steuerkurve als U-förmige Nut (202) in der Stirnwandinnenseite (204) der Transporttrommel (150) ausgebildet ist.

44. Perforationsvorrichtung nach Anspruch 39 und nach einem der vorstehenden Ansprüche, dadurch gekennzeichnet, daß entlang des Umfangs der Transporttrommel (150) benachbarte Aufnahmen (152) der Reihen von Aufnahmen (152) jeweils ein eigenes Rotationsmittel (176, 180, 182, 184, 192, 194, 196, 198, 200, 202, 206) aufweisen.

45. Perforationsvorrichtung nach Anspruch 41 und 44 und nach einem der vorstehenden Ansprüche,
dadurch gekennzeichnet, daß entlang des Umfangs der Transporttrommel (150) benachbarte Aufnahmen (152) jeweils ein eigenes Steuermittel (198, 202) aufweisen, wobei die Steuermittel (198, 202) benachbarter Aufnahmen (152) jeweils wechselweise im Bereich einer der beiden Stirnseiten der Transporttrommel (150) angeordnet sind.

46. Perforationsvorrichtung nach einem der Ansprüche 34 bis 37 und nach einem der vorstehenden Ansprüche,
dadurch gekennzeichnet, daß die Aufnahmen (152) mit Hilfe von Rotationsmitteln (176, 180, 182, 184, 192, 194, 196, 198, 200, 202, 206) derart rotierbar sind, daß die Eigenrotationsbewegung zumindest während der Bewegung der Gegenstände (16) durch die Wirkzone (W) stattfindet.

47. Perforationsvorrichtung nach einem der Ansprüche 34 bis 37, nach Anspruch 46 und nach einem der vorstehenden Ansprüche,
dadurch gekennzeichnet, daß die Aufnahmen (152) mit Hilfe von Rotationsmitteln (176, 180, 182, 184, 192, 194, 196, 198, 200, 202, 206) derart rotierbar sind, daß die Eigenrotationsbewegung im wesentlichen nur während der Bewegung der Gegenstände (16) durch die Wirkzone (W) stattfindet.

48. Perforationsvorrichtung nach einem der Ansprüche 34 bis 38, nach den Ansprüchen 46 oder 47, und nach einem der vorstehenden Ansprüche,
dadurch gekennzeichnet, daß die Aufnahmen (152) mit Hilfe von Rotationsmitteln (176, 180, 182, 184, 192, 194, 196, 198, 200, 202, 206) derart rotierbar sind, daß die Eigenrotationsbewegung während der Bewegung der Gegenstände (16) durch die Wirkzone (W) gleichförmig ist.

49. Perforationsvorrichtung nach einem der Ansprüche 34 bis 39, und nach einem der Ansprüche 46 bis 48, und nach einem der vorstehenden Ansprüche, dadurch gekennzeichnet, daß die Aufnahmen (152) mit Hilfe von Rotationsmitteln (176, 180, 182, 184, 192, 194, 196, 198, 200, 202, 206) derart rotierbar sind, daß die Gegenstände (16) mittels der Aufnahmen (152) während der Bewegung durch die Wirkzone (W) um etwa 360 Grad rotierbar sind.

50. Perforationsvorrichtung nach einem der Ansprüche 34 bis 40 und nach einem der Ansprüche 46 bis 49, und nach einem der vorstehenden Ansprüche, dadurch gekennzeichnet, daß die Aufnahmen (152) mit Hilfe von Rotationsmitteln (176, 180, 182, 184, 192, 194, 196, 198, 200, 202, 206) derart rotierbar sind, daß die Gegenstände (16) mittels der Aufnahmen (152) aus einer Ruhelage vor Erreichen der Wirkzone (W) auf eine voreinstellbare Rotationsgeschwindigkeit (V₁) während des Aufenthaltes in der Wirkzone beschleunigbar sind.

51. Perforationsvorrichtung nach einem der Ansprüche 34 bis 41, und nach einem der Ansprüche 46 bis 50, und nach einem der vorstehenden Ansprüche, dadurch gekennzeichnet, daß die Aufnahmen (152) mit Hilfe von Rotationsmitteln (176, 180, 182, 184, 192, 194, 196, 198, 200, 202, 206) derart rotierbar sind, daß die Gegenstände (16) mittels der Aufnahmen (152) von einer voreinstellbaren Rotationsgeschwindigkeit (V₁) während des Aufenthaltes in der Wirkzone (W) auf eine Ruhelage abbremsbar sind.
